# EUROPEAN PATENT SPECIFICATION

(11) **EP 0 771 531 B1**
(45) Date of publication and mention of the grant of the patent: **25.09.2002**
(21) Application number: 96117404.2
(22) Date of filing: 30.10.1996
(51) Int. Cl.: A23D 9/00, C11B 1/06, C11B 1/10, C11B 3/00, C11B 5/00

(54) **Stable edible oil composition**
Stabile essbare Ölzusammensetzung
Composition stable contenant de l'huile comestible

(30) Priority: 02.11.1995 US 6389; 21.11.1995 US 6990; 29.11.1995 US 7737; 29.11.1995 US 7736; 18.01.1996 US 588524
(43) Date of publication of application: 07.05.1997
(73) Proprietor: Lipidia Holding S.A., 2121 Luxembourg-Kirchberg (LU)
(72) Inventor: Silkeberg, Alf, 03590 Altea (ES)
(74) Representative: Jung Schirdewahn Lemke

(56) References cited:
- EP-A- 0 477 825
- GB-A- 1 053 807
- B. FITCH HAUMANN: "The goal: tastier and 'healthier' fried foods" INFORM., vol. 7, no. 4, 1996, CHAMPAIGN US, pages 320-334, XP002042724
- DATABASE WPI Section Ch, Week 9327 Derwent Publications Ltd., London, GB; Class D13, AN 93-217127 XP002042726 & JP 05 140 583 A (AJINOMOTO KK) , 8 June 1993
- G. KAJIMOTO ET AL.: "Influence of blend ratio of vegetable oils on their thermal oxidation and decomposition of tocopherol" JOURNAL OF JAPANESE SOCIETY OF NUTRITION AND FOOD SCIENCE, vol. 44, no. 6, 1991, JP, pages 499-505, XP002042725
- PATENT ABSTRACTS OF JAPAN vol. 014, no. 250 (C-0723), 29 May 1990 & JP 02 069142 A (HIROTOMO OCHI), 8 March 1990,
- DATABASE WPI Section Ch, Week 9036 Derwent Publications Ltd., London, GB; Class D13, AN 90-270720 XP002042727 & JP 02 189 394 A (TSUKISHIMA SHOKUHIN) , 25 July 1990
- PATENT ABSTRACTS OF JAPAN vol. 009, no. 211 (C-300), 29 August 1985 & JP 60 078542 A (NITSUKEN SUTAMII KK), 4 May 1985,
- DATABASE WPI Section Ch, Week 9209 Derwent Publications Ltd., London, GB; Class D13, AN 92-068538 XP002042728 & JP 04 011 838 A (KANEGAFUCHI CHEM KK) , 16 January 1992
- SCHERZ H, SENSER F: "Food Composition and Nutrition Tables 1989/90", 1989, WISSENSCHAFTLICHE VERLAGSGESELLSCHAFT MBH , STUTTGART

## Description

### BACKGROUND OF THE INVENTION

The present invention relates to edible oils used for frying foods, and more particularly to an oil composition which concomitantly provides dietary advantages and thermal stability.

Edible oils, such as those derived from sources including, for example, seeds and nuts, are glyceryl esters of fatty acids. The main vegetable edible oils on the world scene are soybean oil (16.8), palm oil (12.2), rape seed (canola) oil (9.5), sunflower oil (8.1), cottonseed oil (4.3) and ground nut oil (4). The figures in parentheses are rounded and represent the number of million metric tons world production (Source: "Oil World Annual," 1993). These and other edible oils are generally classified according to the relative proportions of the fatty acid constituents thereof, which may themselves be saturated, monounsaturated and polyunsaturated. Saturated fatty acids, such as lauric, palmitic, stearic, and arachidic acid, are free of doubly bonded carbon. A monounsaturated fatty acid, such as oleic acid, contains a single double bond, whereas polyunsaturated fatty acids each contain multiple double bonds. Health aspects of a particular oil or oil mixture are generally believed to be dependant in part upon the fatty acid composition thereof.

In addition to being a useful source of energy, seed-derived oil may provide nutrients unavailable from other sources, i.e. essential fatty acids contained therein that humans cannot themselves synthesize. Both factors have at times been used to support the once held notion of edible oil as an important nutritional element, but neither remains relevant in present day industrial countries, where obesity is the immediate problem. Because oil is rich in calories, for purposes of reducing or controlling body weight, total intake should ideally be limited in order to restrict the number of consumed calories.

Even essential fatty acids, particularly linoleic acid, long promoted as providing healthful benefits, need not be consumed in significant amounts, and excessive consumption may actually have a negative effect on overall health. The actual nutritional requirement is very small, less than 1% of consumed calories, and the actual average consumption is estimated to be 10 times this amount. The polyunsaturated linoleic acids, although causing a reduction of low density serum lipoprotein (LDL), the so-called "bad cholesterol," are also thought to undesirably cause a simultaneous reduction of high density serum lipoprotein (HDL), the so-called "good cholesterol" believed responsible for preventing formation of vascular plaque. Additionally, overconsumption of long chain lipids, like for example linoleic acid, is believed to interrupt metabolism, resulting in a reduction in eicosanoids. Eicosanoids are a wide variety of compounds like prostaglandins, leukotrienes, lipoxins, hydroxy and epoxy fatty acids, which regulate immune function by altering the activity of peripheral immune cells and particularly nocytes, macrophages and neutrophils (Gerrard J.M. 1985, Prostaglandins and Leukotrienes (Marcel Dekker, New York); German J.B. et al. 1987, Modulation of zymosan stimulated leukotreine release by dietary polyunsaturated fatty acids, Prost. Leuk. Med. 30, pp. 69-76; and Holman R. 1986, Essential fatty acids, prostaglandins and leucotrienes, Prog. Lip. Research 25:1). Furthermore, because of the inherently unstable multiple double bond structure of polyunsaturated fatty acids such as linoleic acid, free radicals may be released therefrom, potentially contributing to senescence. It is therefore generally recommended that consumption of linoleic acid be limited to 10% of the daily calorie intake.

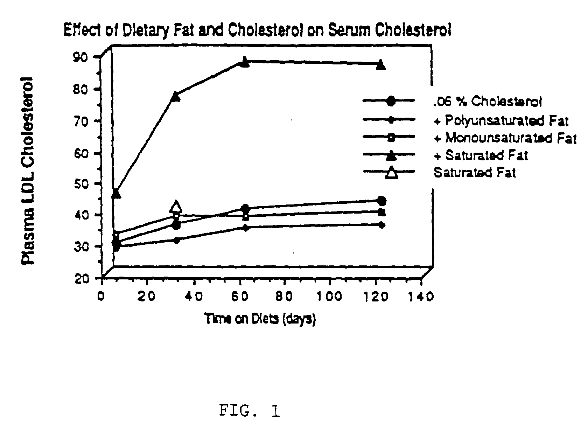

At the other end of the edible oil spectrum, oils having high saturated fatty acid compositions are not generally viewed as oils which can provide a healthful alternative, since saturated fatty acids have been implicated in raising the level of total serum cholesterol, and particularly the LDL component, as shown in Fig. 1 (graph taken from Spady D.K. and Dietschy J.M. 1988, Interaction of Dietary Cholesterol and Triglycerides in the Regulation of Hepatic Low Density Lipid Transport in the Hamster, J. Clin. Invest. 81, 300). Although believed by some to promote health benefits because of its high content of beta carotene, a precursor to vitamin A, palm oil, high in saturated fatty acids, nevertheless has been shown to demonstrate the same negative effect on cholesterol levels.

Recent findings have supported use of oils containing a high content of monounsaturated fatty acids by individuals concerned about serum cholesterol levels. During the last decade, new varieties of some of the above cited traditionally available edible oils which have enhanced high monounsaturated fatty acid content have been created by natural selection plant breeding. The oil from these new varieties has initially been expensive and available only in limited quantities, due to a crop yield and/or oil content thereof lower than for other oil plants coupled with the high cost of developmental research. However, it is expected that these varieties will in time become increasingly available at prices comparable with their older relatives. Two of the new varieties are High Oleic Sunflower Oil (HOSO) and High Oleic Rape Seed (Canola) Oil, of which the former is presently abundantly available, and the latter available in limited amounts.

Apart from widely believed health aspects associated with consumption of a particular oil, degradation is an added, and perhaps equally important consideration. An oil is said to be stable when it demonstrates delayed lipid oxidation. In this context, an oil may be considered stable when it can be stored for prolonged periods as compared with other oils without evidence of auto-oxidation. A stable oil may also be heated for long periods, such as when used commercially for frying, before experiencing such lipid oxidation under thermal stress. Although it is an important concern for all edible oils, oxidation degradation is of particular interest for oil used in professional frying, a term used to refer to commercial use. The distinction "professional" is significant only because such oil is routinely used for several hours or days, in contrast to relatively short duration exposure to such thermal stress during normal household use. Thus, a higher stability is generally required for professional applications, as well as any other time the oil will be thermally stressed for prolonged periods. Vulnerability of various oils to degradation is affected by the fatty acid composition thereof, and the absence or presence of antioxidant agents. Generally, the higher the saturated fatty acid content, the more stable the oil. Oil with a higher presence of unsaturated fatty acid moieties will generally be more susceptible to degradation, with polyunsaturates being relatively more vulnerable than monounsaturates. When raised to elevated temperatures, the rate at which the particular oil will degrade is greatly accelerated, and depending upon fatty acid composition, the oil may be unacceptable for such use in its natural state. For example, of the above listed traditional oil varieties, only one or two of them have a fatty acid content which provides sufficient stability in their natural form to enable their use for professional frying or cooking. Palm oil, although stable because of its high saturated fatty acid content, is also consequently not considered an oil healthful in the diet, and is therefore not generally recommended by nutritionists. Ground-nut oil, such as peanut oil, which has about 55% monounsaturated fatty acids and 26% polyunsaturated fatty acids, is more stable than other unmodified oils. However, it is not significantly more stable to make it a very attractive oil for frying, unless for other reasons than stability, such as a preference for the flavor of this oil. Soybean, sunflower, and cottonseed oil are oils high in polyunsaturated fatty acids, and are therefore too unstable for prolonged use at elevated frying temperatures. Rape seed oil is also unacceptable, because it has an unusually high content of linolenic acid, i.e. 10% or more, making this oil very unstable, the mechanism of which is explained below. (The fatty acid content figures are from Herrmann Pardun, Analyse der Nahrungsfette, Berlin 1976). In order to use the polyunsaturated fatty acid oils or rape seed oil (canola oil) for cooking, frying and baking they are chemically modified in a process described later herein, and referred to as hydrogenation.

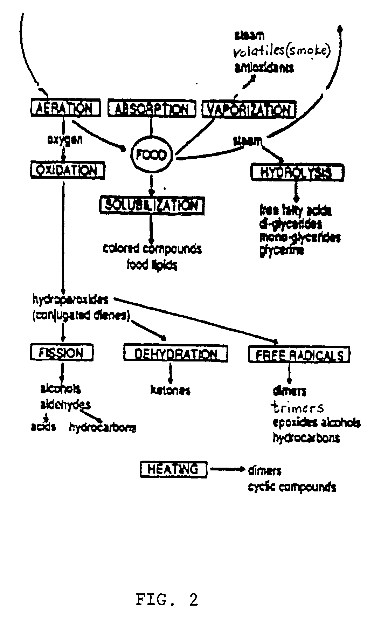

The triglyceride molecules that make up oils can be degraded either by reaction with water, called hydrolytic rancidity, or by reaction with oxygen, called oxidative rancidity, the mechanisms of which are illustrated by the flow chart in Fig. 2 (diagram taken from Stier R.F. and Blumenthal M.M., Quality Control in Deep-Fat Frying. Baking & Snack, February 1993). Rancidity due to hydrolysis requires moisture and can cause disagreeable odors and flavors, whereas oxidative rancidity is generally cited in the literature as a potential health concern. Such breakdown results in reduction of nutritional value including the destruction of vitamins, as well as the formation of a number of potentially harmful byproducts, such as oxidized fatty acids, ketones, aldehydes, and possibly a number of mutagenic substances.

The mechanisms of oxidative rancidity are believed to follow the pattern illustrated as follows. Auto-oxidation begins with the catalyzed abstraction of a hydrogen from an unsaturated fatty acid group. Allylic hydrogen, i.e. hydrogen attached to a carbon atom adjacent to a double bond is easier to abstract than those attached to a doubly-bonded carbon, and helps to explain the greater instability of oils containing higher proportions of unsaturated fatty acids. A carbon, situated between two pairs of double bonded carbons, as is found for example in polyunsaturated fatty acids such as linoleic or linolenic acid, is particularly susceptible to hydrogen atom removal. Light, trace metals and oxygen are thought to be catalysts of this reaction. Minus the hydrogen atom, the fatty acid group of the triglyceride becomes a reactive free radical. It reacts with oxygen to form hydroperoxy free radical. This molecule wants to react with a hydrogen atom to form a hydrogen peroxide. The hydrogen can be supplied by a triglyceride molecule, creating a new free radical. Auto-oxidation has now begun, because this free radical has been formed without a catalyst. This means the reaction will perpetuate itself, once it starts, as long as a certain small amount of oxygen is available. The formation of the hydroperoxide on one of the fatty acid components makes the molecule unstable. It easily breaks down to shorter chain ketones, acids and aldehydes by a variety of mechanisms.

As has been demonstrated above, oils, other than saturated oils which are generally avoided due to their negative health implications, do not possess sufficient stability in their unmodified form for use in professional frying or other applications where thermal stress over prolonged periods is involved. Neither soya oil, canola oil, sunflower oil, nor cottonseed oil, for example, are generally recommended for use in frying in their natural form, because of the rapid degradation that would occur under thermal stress. Addition of synthetic antioxidants is also either ineffective because of their volatility, or commercially prohibited by law. Although effective for frying foods and still used extensively for such purpose around the world, palm oil and other so-called "tropical oils" have, in recent years, fallen out of favor in the United States, because of a public campaign implicating them as a leading contributor to development of atherosclerosis. It is for this reason that most frying oils commercially used within the United States are originally unsaturated oils which are used in a partially hydrogenated modified form. Hydrogenation is a process by which hydrogen is added to unsaturated molecules under pressure and elevated temperatures in the presence of a metal catalyst, usually nickel. The partial hydrogenation converts the carbon double bonds to single bonds, without causing hydrogenolysis of the ester linkage.

Hydrogenation changes both the physical as well as the chemical properties of an oil. Removal of some of the double carbon bonds imparts greater stability to the oil by decreasing the number of allylic positions, making the fatty acids less prone to hydrogen abstraction. Hydrogenation, however, also affects the isomeric configuration of the fatty acid. In their natural, unmodified form, configuration about double bonds in unsaturated fatty acids is almost invariably *cis,* rather than the more stable *trans*-configuration. Such *cis*-configured fatty acid chains have a bend, or kink, at the double bond in the molecule, the *cis*-configured hydrogen atoms being oriented on the same side of the carbon chain as the double bonds. In the partial hydrogenation process, some of the double bonds and some of the single bonds are transformed to the *trans*-configuration. Known as *trans* fatty acids, these modified fatty acid chains are straightened out and converted, so that the hydrogens appear on the other side of the carbon atom chain. Where the double bonds have been only partially converted to single bonds in the *trans*-configuration, and a single double bond remains, the fatty acid is, for formal purposes, a monounsaturated fatty acid. However, it has been strongly suggested in the art that the *trans*-monounsaturated fatty acids both chemically and physically, and with regard to the metabolic effects on humans and animals, behave as if they were saturated fatty acids.

For some time it has been debated among nutritional scientists and in the media whether or not a health risk is attendant to consumption of *trans* fatty acids. The Food & Drug Agency contracted with the Sciences Research Office, Federation of American Societies for Experimental Biology, to provide scientific assessments of this highly contested issue. "Health Aspects of Dietary *Trans* Fatty Acids" was a major work involving contributions of many scientists and was published in August, 1985 (Center for Food Safety and Applied Nutrition, Food and Drug Administration, Department of Health and Human Services, Contract No. FDA 223-83-2020). The daily average intake was estimated to be 7.6 grams per day (Ibid, Appendix A, p.11). Although the conclusion of the panel suggested that there was little reason for concern over the safety of dietary *trans* fatty acids, additional studies and research were recommended.

Indeed, since this study, many investigations have, with growing concern, warned against possible health hazards with regular or overconsumption of *trans* fatty acids. Some researchers, as noted below, believe intake of *trans* fatty acids to be partially responsible for vascular diseases, atherosclerosis and coronary heart diseases. The main discrepancy between the FDA review and the following studies was that the researchers in the former did not make a distinction between levels of HDL and LDL. A study that served as an alarm signal in the media was a study by R.P. Mensink and M.B. Katan (Effect of Dietary *Trans* Fatty Acids on High-Density and Low-Density Lipoprotein Cholesterol Levels in Healthy Subjects, New Engl. J. of Med., Vol. 323, No. 7, pp 439-45, Aug 16, 1990), which made the following conclusion (ibid p. 439): *"The effect of TFA on the serum lipoprotein profile is at least as unfavorable as that of the cholesterol-raising saturated fatty acids, because they not only raise LDLP cholesterol levels but also lower HDLP cholesterol levels.* " This study has since been criticized because higher than average levels of *trans* fatty acids were used, and because the study was of short duration. However, a later study published in The Lancet (Willet W.C. et al., Intake of *Trans* Fatty Acids and Risk of Coronary Heart Disease Among Women, The Lancet Vol. 341, March 6, 1993) seemingly dispels this criticism. This investigation comprised 85,095 healthy women, hospital nurses. The investigation spanned eight years, and the daily *trans* fatty acid intake was considerably lower among the nurses than typical in the average population (2.4 grams in the lowest quintile and 5.7 grams in the highest). The conclusion was that the risk of coronary heart disease for the highest versus the lowest quintile was 1-50, i.e. a 50% higher risk to get the disease for the highest quintile, while still consuming less *trans* fatty acids than the average population. (Ibid p. 583). It was further noted that *"These findings support the hypothesis that consumption of partially hydrogenated vegetable oils may contribute to the occurrence of C[oronary] H[eart] D[isease]*." The bottom line of this investigation was (ibid p. 585): *"Our findings must add to concern that the practice of partially hydrogenating vegetable oils to produce solid fats may have reduced the anticipated benefits of substituting these oils for highly saturated fats, and instead contributed to the occurrence of C[oronary] H[eart] D[isease]."*

A brochure distributed by the American Council of Science and Health (Facts About Fats - Health Effects of Dietary Fats and Oils, February 1995-06500) paraphrases a growing consensus in the United States regarding dietary intake of *trans* fatty acids: "*Feeding studies in human volunteers have shown that partially hydrogenated vegetable oils have effects on the blood lipoprotein profile that are less desirable than unmodified vegetable oils*. " (Ibid p. 15).

Despite these recommendations, in the labeling of food products, particularly frying oils in the United States and many other countries, the *trans* fatty acids are counted among the monounsaturated constituents. Albeit formally correct where a double bond is still present in the fatty acid chain, the grouping of the terms is potentially misleading to the public from a health standpoint. In the United Kingdom the *trans* fatty acid content is to be specified separately on labels. Although declaration of *trans* fatty acids is not required in the European Union, only fatty acids having a *cis*-configuration may be declared as monounsaturated fatty acids. This form of labeling also adds to the confusion of the public in the following way. By omitting disclosure of the *trans* fatty acid content, the total fatty acid content does not add up to 100%, yet the public still has generally no idea of the potentially harmful nature of the hidden ingredients. The United States FDA is believed to be presently contemplating a change in the labeling regulations to reflect this deficit, so that people who may have problems with their cholesterol balance can be properly advised of the dietary risk factors.

Most or all medical studies that have been made to estimate the possible hazards associated with consumption of *trans* fatty acids have dealt with margarine or cakes, where the *trans* fatty acid content is generally less than 10%, and in the case of margarine, the most common object of such investigation, the product has never been thermally stressed. Frying oils, to the contrary, may contain up to 35.6% (mean 25.3%) *trans* fatty acids (Enig: *Trans* Fatty Acids in the Food Supply: A Comprehensive Report covering 60 years of research, 2nd Ed., 1995, Enig Associates Inc. Silver Spring MD., pp 117-118). For example, the partially hydrogenated canola oil ("Fry-Well" brand), which is referred to in the "Testing" section of this patent application, was found to contain 29.4% *trans* fatty acids. The total saturated fatty acid content, including the *trans* fatty acids was, however, as high as 56.2%, a finding which suggests that an oil rich in saturated fatty acids, such as, for example, natural or hydrogenated palm oil, or another hydrogenated oil, had been used for pre-frying the food used in the test. It is also noted that a combination of partial and full hydrogenation is sometimes used in order to stabilize a normal vegetable oil. Therefore, *trans* fatty acid related health risks may be greater than suggested by the studies because of the higher content in frying oil required for thermal stability.

It is important to illustrate the actual impact of frying oils on the population by way of the following concrete example, in order to show that the public health risks associated with intake of saturated and trans fatty acids is not merely of academic concern, and to further demonstrate the magnitude of the problem. A portion of French fries in a major fast food chain is reported by the owners to contain 165 grams. The total fat content was found to be 18% (in certain cases it can be up to 25% or more), with an average *trans* fatty acid content estimated at 25.3%. Therefore, a single portion of fries contains 7.6 grams of *trans* fatty acids, in certain cases more. This figure is alarming compared to the Willet investigation (*supra*) where there was concern with the substantially increased risk for coronary heart disease in the top quintile of nurses who for eight years had a daily intake of only 5.7 grams of *trans* fatty acids. Many people, particularly younger members of the population, frequently eat meals prepared at fast food operations, and may also eat other foods like fried fish, fried apple-pie, margarine, beef fat, doughnuts, etc. Based on this fact, an estimate appearing in the literature that the average consumption of *trans* fatty acids may be as high as 20 grams might very well be accurate, at least for a significant portion of the population, such as those who are frequent customers of fast food establishments. (Enig M.G. et al., Isomeric *Trans* Fatty Acids in The U.S. Diet, J of the Am. Coll. of Nutr., Vol 9, No 5, 1990, pp 471-86.)

It should be added, that during the frying process, the oil is invariably oxidized to some extent. No major investigation is believed to have been made in the United States or elsewhere regarding the possible health hazards associated with stressed, or even oxidized *trans* fatty acids in frying oil. This apparent lack of empirical information is evidenced by the responses of a panel of lecturers from the medical profession who had investigated the possible health risks with *trans* fatty acids and who were questioned during a convention of the American Oil Chemists' Society in San Antonio, TX, in 1995, regarding this issue. They indicated that none of them personally conducted such investigations, nor were aware of others who had done so.

In conclusion, practically no frying oil or fat presently on the market can be regarded as a healthful dietary component as they are either naturally saturated or partially hydrogenated, which, at best, amounts to the same. Thus the introduction of previously discussed new hybrids of oil seeds having significantly higher monounsaturated fatty acid content is believed to provide a substantial health advantage. Because of the high proportion of monounsaturated fatty acids, the oil not only provides the purported health benefits of a *cis*-configured monounsaturated fatty acid, but is more stable than other unsaturated oils in their unmodified state.

Some of these new varieties of traditionally used vegetable oil, such as the High Oleic Sunflower Oil (HOSO) and High Oleic Rape Seed (Canola) Oil mentioned earlier have less than 10% saturated fatty acids and between 70% and 90% monounsaturated fatty acids, or more. The most advanced variety now in commercial use is the HOSO manufactured in the United States under patent numbers 4,627,192 and 4,743,402 issued respectively December 9, 1986 and May 10, 1988 to Fick. It has been known on the market by the brand name "Trisun." This particular brand has been used in the experiments that will be referred to later, but there is no reason not to believe that other oil seeds will appear on the market which will have identical or similar fatty acid profiles.

HOSO has been the subject of a three year comparison study with normal sunflower oil and palm oil conducted for the European Union with participation of experts from various EU countries, starting in 1993 (Utilisation of Sunflower Oils in Industriale, EU grant AIR 92-0087). Although the results of the study have not yet been published, a resume has been given by the chairman of the group at a symposium in Germany. The results clearly point in the expected direction. Palm oil was found the most stable, but perhaps only marginally so in relation to HOSO. Normal sunflower oil could not be stored more than 1 month, whereas the new variety, HOSO, could be stored in excess of 5 months.

HOSO, which is generally offered as a natural oil, is believed to provide a more healthful alternative in the diet, compared with other oils, by virtue of a high monounsaturated fatty acid content thought to reduce serum LDL. However, in its natural state, stability of the oil when used for professional cooking, frying and baking, or any other like use where the oil is subjected to prolonged periods of thermal stress is limited to that provided by virtue of its predominantly monounsaturated composition and any natural antioxidants that may be present therein.

Stability of an oil may be increased for purposes of prolonged storage by the addition of a number of known synthetic antioxidants, such as, for example, butylated hydroxy anisole, buylated hydroxy toluene, propyl gallate, and tertiary butyl hydroxy quinone; acid synergists, such as, for example, citric acid and its esters, monoglyceride citrate, ascorbic acid and its esters, and ascorbyl palmitate; and foam inhibitors, such as, for example methyl silicone, all shown effective in delaying lipid oxidation. However, where the oil is to be used at elevated temperatures for frying or baking, these substances all tend to evaporate, distill or degrade rapidly under actual conditions of use, reducing the stabilizing effects thereof dramatically. Dimethylpolysiloxane, also referred to above as methyl silicone, is used in many or most frying oils in the United States and in the United Kingdom. It is believed mainly to function as a foam inhibitor, and may be effective in dealing more with the visible symptoms of degradation than with actual rancidity. Tests documented later in this patent application involving an oil containing methyl silicone tend to indicate that the presence of the additive did not appear to impart significant stability. The argument of effectiveness of methyl silicone is rendered partially moot in many European countries where the use of methyl silicone had been prohibited and is now restricted, presumably for public health reasons.

An attempt has been made, as disclosed in U.S. Patent No. 5,260,077 issued to Carrik et al. on November 9, 1993, to increase the stability of a high oleics oil, by adding an antioxidant effective amount of tocopherol in order to stabilize the oil. Tocopherols have been known by the workers of the art for many decades. It is also well-known that some oils, like soybean oil, have a high natural content of tocopherol, and that supplementing the level by an additional amount would be counter-productive, actually imparting a pro-oxidative effect. Studies have suggested that oils and other food products from vegetable origins generally contain sufficient quantities of tocopherols without enhancement. An author of one such study suggests that *"unless the natural antioxidants in these products have been lost during refining and processing or by thermal degradation, the benefits of adding tocopherols to such products are marginal."* (Eastman Chemical Products, Inc., Marion E. Dougherty, Jr., Antioxidant Applications in Frying Oil, presented in a lecture at the University of California, Davis, May 17, 1990, pg. 14). The same study further showed that tocopherol content of the oil tested was depleted as much as 50% in only two hours under actual frying conditions at a temperature of 190°C. It is noted that all the experiments to which the cited patent application refers were made with A.O.M. (Active Oxygen Method), which means heating to 98°C, and the stability results were most probably not substantiated with actual frying where the volatility of the tocopherol may have been better demonstrated. Furthermore, many countries do not permit the use of additives like tocopherols in edible oils.

Other less commercially utilized oils are known in the art to demonstrate higher stability than the traditionally available oils already discussed above. One such oil crop is sesame seeds, the seeds containing approximately 50% oil. Sesame seeds are one of the most important oil crops of traditional agriculture in many developing countries. The world production is estimated at about 2.2 million metric tons, out of which 1.7 is from developing countries. The planting of this seed has been of minor importance in the rest of the world for two reasons: the lack of traditional use of the oil of this seed, and the problems with development of suitable mechanical harvesting methods. Thus, in the western world, sesame seeds are mainly used in the bakery industry for bread topping.

Studies, particularly ones performed by Japanese researchers, have suggested that sesame oil can provide healthful benefits when included in the diet. Among other possible benefits, the results conclude that the consumption of an oil containing sesamin and other sesame lignans, potent antioxidants, may stabilize the Vitamin E in human bodies, delaying the manifestation of senescence (Yamashita et al., Effects of Sesame in the Senescence-Accelerated Mouse, J. Jpn. Soc. Nutr. Food Sci., Vol 43, 1990, pp 445-49; and Yamashita et al., Sesame Seed Lignans and γ-Tocopherol Act Synergistically to Produce Vitamin E Activity in Rats, Am. Inst. of Nutr. Aug 1992, pp 2440-46). Another study reported that sesame oil produced better carotene utilization than did soybean and peanut oil, perhaps also due to the stabilization of vitamin E *in vivo.* (Chou T.C. and Malat A.L., Factors in the Chinese Diet Effecting Carotene Utilization, J Nutr. 51, pp 305-15 (1953)). Further studies suggest that consumption of sesame oil may reduce the concentration of serum and liver cholesterol significantly, irrespective of dietary levels, by simultaneously inhibiting absorption and synthesis of cholesterol (Sugano M. et al., Influence of Sesame Lignans on Various Parameters in Rats, Agric. Biol. Chem. 54, pp 2669-73 (1990), Hirose et al., Inhibition of Cholesterol Absorption and Synthesis in Rats by Sesamin, J of Lipid Res., Vol 32, 1991, pp 629-38). Sesame oils have also been thought to be responsible for an increased number of successful pregnancies in adrenolactomized female rats (Tobin C.E., Effects of Adrenolactony on Pregnancy and Survival of Untreated and Sesame Oil Treated Rats, Endocrinology, 28, pp 419-25, (1941)).

The same potent antioxidants attributable to the aforementioned purported health benefits are believed responsible to the stability of sesame oil. Sesame oil, however is much more expensive than traditional oils, perhaps by a factor of four, making its use for frying in unadulterated form prohibitively expensive. Unfortunately, the art had for some time suggested that its mixture with other oils would not achieve a desired degree of stability since studies directed to its overall effect have heretofore indicated that the stability conferred to an oil with which it is combined is merely related to its proportion thereof.

Unlike the aforementioned traditionally available oils which are obtained by solvent extraction, sesame oil is normally obtained by a mechanical pressing operation, and is generally available as unroasted and roasted oil. Subsequent refining steps are carried out to bleach and deodorize the oil. When referred to in the literature, the term "sesame oil" generally excludes roasted sesame oil and undeodorized sesame oil, the former having a dark brown color and distinctive aggressive odor and flavor, and the latter also having a strong olfactory component. The use of these oils is more prevalent in the Far East where the distinctive flavor is enjoyed. Sesame oil is defined in British Pharmacopoeia (1980) as being "clear, light yellow, almost odorless, " the product of such bleaching and deodorizing.

Further research has suggested that a marked improvement in stability of an oil mixture containing sesame oil may be achieved by using a solvent extracted sesame oil rather than oil obtained by conventional pressing methods. Marked gains in stability by virtue of using a solvent extracted refined, bleached and deodorized (RBD) sesame oil, have been demonstrated in the European patent application No. 911 161 158.6 in the name of the present inventor herein, Silkeberg, published April 1, 1992. Although the extraction method described in the application is highly relevant, and may well provide the basis for further process refinement in the future, a number of unforeseen hurdles were found in the practical applications of the findings. The oil yield extracted from the meal is very small, and therefore very expensive. Problems also remain in refining the extracted oil in a manner which keeps the potential antioxidants abundant and vigorous.

Based on the foregoing, there is a need for an edible oil that, as a special composition and/or the product of a special treatment, provides exceptionally high stability, permitting its use in thermally stressed applications such as professional frying without requiring hydrogenation. Ideally, the edible oil composition should concomitantly provide a consumer with dietary components thought at present to have a desired *in vivo* metabolic effect, including a positive effect on HDL/LDL cholesterol balance.

### OBJECTS AND SUMMARY OF THE INVENTION

Accordingly, it is an object of the invention to provide an edible oil composition which overcomes the drawbacks of the prior art.

It is a further object of the invention to provide an edible oil composition which provides enhanced stability preferably without use of synthetic additives or chemical modification of the chemical composition of the fatty acids.

It is a still further object of the invention to provide an edible oil composition which, in addition to providing enhanced stability, concomitantly provides a consumer with oils presently thought to have a desired *in vivo* metabolic effect, including a beneficial effect on HDL/LDL cholesterol balance.

It is yet a further object of the invention to provide an oil composition which demonstrates such enhanced stability under actual conditions of frying, permitting its extended use for professional frying in which oil is thermally stressed over prolonged periods.

Briefly stated, an oil composition includes at least a major proportion of a first oil constituent, referred to as a "bulk oil, " and a second oil combined therewith for increased stability, the second oil being a sesame oil. For purposes of balancing optimum stability with the goal of providing an oil composition having associated health benefits within currently accepted dietary guidelines, the bulk oil is preferably an oil, or combination of oils, high in monounsaturated fatty acid content including, for example, any of the available oils having a monounsaturated fatty acid content in a range of about 70% or greater, and having a maximum of about 10% saturated fatty acids. Advantageously, the linolenic acids content should also not exceed 3%. Such oils include, for example, High Oleic Sunflower Oil. The sesame oil used as the second oil constituent is advantageously a "dedicated" sesame oil, extracted and refined in a manner preserving substantial concentrations of antioxidant factors present therein. Optionally, the composition may contain a third oil in a minor proportion, the third oil being selected from a group of oils high in Δ-5 avenasterol, such as, for example, rice bran, oat germ or wheat germ oil. Each of the constituent oils used in the composition in accordance with a particularly advantageous embodiment of the invention within the above stated preferred guidelines is at present thought to have a positive effect on metabolism when included in the diet. Therefore, a consumer of such composition, will be provided an alternative to the other choices heretofore available and deemed less desirable by the general consensus of nutritionists.

In accordance with an embodiment of the invention there is provided an oil composition which includes a major proportion of a first oil, i.e. the bulk oil described above. The composition further includes a minor proportion of sesame oil. Advantageously the sesame oil is a dedicated sesame oil in which lignans and other antioxidant content thereof is sufficiently high to impart antioxidative properties to the overall composition when added in such minor proportion, the definition and nature of which will be addressed in greater detail below. The edible oil composition comprises sesamin in a range of 25-45 mg per 100 g of edible oil composition and sesamolin in a range of 20-40 mg per 100 g of edible oil composition. Optionally, the composition further includes a minor proportion of another oil rich in Δ-5 avenasterol, such as, for example, rice bran, oat germ and wheat germ oils. Minor proportions for both the sesame and optional oils are in preferred ranges from about 0.5% to about 10% based on total weight of the composition. Where the sesame oil used in preparation of the composition is undeodorized, and the composition does not include a minor proportion of the oil component high in Δ-5 avenasterol, the preferred range for the sesame oil is from about 0.5% to about 6%, in which range the distinctive taste and smell thereof has been found to be apparently undetectable by organoleptic studies. All percentages herein are by weight.

One or more of the sesame antioxidant agents, including actual active antioxidants or precursors thereof, may be added to the bulk oil in quantities effective for imparting antioxidative activity thereto, or in addition to the sesame oil component. The agents could either be derived synthetically, or extracted by a suitable process from sesame oil.

The above, and other objects, features and advantages of the present invention will become apparent from the following description read in conjunction with the accompanying drawings.

### BRIEF DESCRIPTION OF THE DRAWINGS

Fig. 1 is a graph of the effects of dietary fat on serum cholesterol;
Fig. 2 is a flow chart of the mechanisms of oil degradation; and
Fig. 3 is graph plotting degradation of various oils over time during frying.
Fig. 4 is a graph showing test results of food quality vs. hours of frying time in various oils tested.

### DETAILED DESCRIPTION OF THE PREFERRED EMBODIMENTS

The present invention comprises an edible oil composition which, prepared by combination of particular oils, provides an edible oil composition which yields the purported health benefits associated with monounsaturated fatty acids in a composition that is exceptionally stable, compared to other natural oils, particularly when exposed to thermal stress associated with, for example, professional cooking, frying and baking. As used herein, an oil is a triglyceride, i.e. a glyceryl ester of fatty acids, each molecule having three fatty acid moieties. Thus, fatty acid content of an oil or composition of oils, as used herein, refers to the fatty acid moieties of the triglyceride, and not a free acid or those contained in other esters. Further, a natural, or unmodified oil or oil composition is defined as non-hydrogenated oils or combinations thereof, conveniently obtained from plants, and free of synthetic additives.

In an embodiment in accordance with the invention, an oil composition comprises a major proportion of an edible vegetable oil, advantageously having a high monounsaturated fatty acid content, referred to as a "bulk oil" herein. The composition further includes a minor proportion of sesame oil, advantageously a "dedicated" sesame oil, and optionally a minor proportion of another oil high in Δ-5 avenasterol content. The minor proportions for both oils in preferred ranges are from about 0.5% to about 10% based on the total weight of the composition. All proportions herein are by weight, based on the total weight of the composition, unless otherwise stated. Where the sesame oil used in preparation of the composition is undeodorized, and the composition does not include a minor proportion of the oil component high in Δ-5 avenasterol, the preferred range for the sesame oil is from about 0.5% to about 6%, in which range the distinctive taste and smell thereof has been found to be apparently undetectable by organoleptic studies, as will be described more fully below. In a composition which includes the addition of the optional constituent oil high in Δ-5 avenasterol, such as rice bran oil, the preferred range of an undeodorized sesame oil may be increased in an amount proportional to the addition of the optional oil, preferably up to about 10%, without apparent detection. This feature will also be addressed further below.

The constituent oils will now be separately addressed for purposes of detailing the individual compositional and functional aspects of each.

### The Constituents and Their Purported Functional Contribution

### Bulk oil:

A "bulk oil" comprises a major portion, i.e. constitutes a majority of the total weight of the oil composition in accordance with the invention, and can be a single oil type or combination of suitable oils, which, when combined with the other constituents described herein, demonstrates enhanced stability as compared with the natural bulk oil or oils, and in some cases possibly even greater stability than any of the other constituent oils of the composition. The stability of any edible oil selected for use as the bulk oil will benefit by the addition of the other constituent oils described below, and therefore use of such oils is contemplated within the scope of the invention as embodied herein. These will include, for example, any of the available oils such as soybean oil, rape seed (canola) oil, sunflower oil, cottonseed oil, ground nut oil, etc. While benefiting from the addition of the other constituents mentioned herein, the degree of overall stability demonstrated by the oil composition comprised of such bulk oils will likely be limited however by the instability of such oils in their natural states, determined at least in part by linoleic, linolenic and other polyunsaturated fatty acid content. Insofar as fatty acid composition of the bulk oil determines its natural stability as discussed above, and consequently the ultimate stability achieved when combined with the other oil constituent or constituents as described herein, and further considering the currently held dietary recommendation for reduced consumption of saturated and polyunsaturated fatty acids as discussed earlier, the bulk oil is preferably comprised of an oil with a high content of monounsaturated fatty acids. The term "high content of monounsaturated fatty acids" is, for the purpose of this invention, defined as an oil, or combination of oils, that has a content of a minimum of 70% monounsaturated fatty acids, and a maximum of 10% saturated fatty acids. Advantageously, the linolenic acids content should also not exceed 3%. Since, advantageously, the oil composition disclosed herein, in addition to providing increased stability, seeks to provide a healthful alternative to other conventionally available oils useful in frying and the like in accordance with currently held medical beliefs, the bulk oil will preferably be a natural oil, and not one that is hydrogenated. Consequently, the fatty acids of such natural oil will advantageously have a cis-configuration in an embodiment of the invention. As noted in the background section, new varieties of traditionally available oils have been developed from selectively bred plants to provide a natural oil having such desired high content of monounsaturated fatty acids. These varieties are offered as illustrative examples only, and shall not limit the scope of this invention, insofar as the other traditional oil crops will likely be engineered through, for example, various genetic means and the like, to yield oils having a suitable high content of monounsaturated fatty acids. The experiments that have been carried out for this invention have dealt specifically with High Oleic Sunflower Oil (HOSO), but there is no reason to believe that the results would have differed substantially if other oils with comparable fatty acid content had instead been used.

The monounsaturated oils which are suggested as actual examples of the bulk oil for the present invention, have, however, only recently been available in large scale on the markets. They have still a high price premium over the traditional oils, and the stability in their natural form is inferior to palm oil or the chemically manipulated traditional oils, i.e. those subjected particularly to partial hydrogenation, both factors that limit the demand for them. The scope of this invention, therefore, is to suggest a method and composition that considerably enhances the stability of the oils having this high content of monounsaturated fatty acids and which thus makes them more commercially valuable.

### Sesame Oil:

The main crop of the seeds used in arriving at the results forming the basis for the invention comes from *Sesamum indicum*, Linn (Family Pedaliaceeae). At present, this specie of sesame plant is the primary source for commercially available sesame seeds. For example, *Sesamum angustifolium*, one such wild specie, has been shown to contain high levels of sesamolin and sesangolin, known precursors to two antioxidant phenolic compounds of importance to this invention. Similarly, a related specie, *Sesamum alatum*, contains very high amounts of 2-*epi-*sesalatin, the implication for our purposes, though, is yet unknown. (Kamal-Eldin Muhammed Salih A., Seed Oils of *Sesamum indicum*, L. and Some Wild Relatives, Academic Thesis, Uppsala, Sweden 1993; and Kamal-Edlin A. and Appelqvist L.A., Variation in Fatty Acid Composition of the Different Acyl Lipids in Seed Oils from Four *Sesamum* Species, Dep of Food Hygiene, Swedish Univ of Agr Sciences, Uppsala, Sweden 1993). The identities of the lignans present in the oils from the cited sesame species were established by gas chromatography-mass spectrophotometry, and their levels were determined by high performance liquid chromatography. Although the tests have only been made with one of the species, *Sesamum indicum*, for the purpose of the patent claims, oils derived from all the aforementioned species are intended to be included within the term "sesame oil," otherwise generally referred to in the specification variously by the terms "sesame seeds" or "sesame oil. "

As demonstrated in the European patent application No. 911 161 158.6, published April 1, 1992, when mixed with other oils, sesame oil has a synergistic effect on the stability of the resultant composition, resulting in stability perhaps in some cases even greater than that of 100% sesame oil. It is theorized that the reason this synergistic stabilization effect had not been discovered, or at least not previously sufficiently explained to an extent which would suggest commercial application, is that the tests have generally been made under conditions other than real frying. It is thought the sesame specific antioxidants are only created during real frying and although the precursors are abundant in the seeds and also, albeit to a lesser extent, in an unrefined sesame oil, they are not active, before being "challenged" and "degraded" by hydrolysis under thermal stress. This mechanism is suggested in a paper published by Fukuda et al. in the Agric. Biol. Chem (Chemical Aspects of the Antioxidative Activity of Roasted Sesame Seed Oil, and the Effect of Using the Oil for Frying, 50 (4), pp. 857-862, 1986) mainly dealing with roasted sesame oil, and conducted under actual frying temperatures in the presence of potatoes. Water present in the potatoes is thought to hydrolyze the antioxidant precursors, i.e. sesamolin and sesamin, as well as a third precursor thought to be present but as yet undiscovered, to create the active antioxidants, including, for example, sesamol and sesaminol, during the frying process.

For purposes of enhancing the desired benefits achieved in the stable edible oil in accordance with the invention, a dedicated sesame oil is advantageously used for the sesame oil constituent. For purposes herein, "dedicated sesame oil" is defined as an end product of a sesame oil which has been obtained from a specially selected sesame crop and/or extracted and refined according to a process which retains as components therein a sufficient concentration of the antioxidant precursors to achieve synergistic stability-imparting effects to a bulk oil with which it is mixed within the acceptable range prescribed herein. "Antioxidant agents, factors or components" will be used synonymously herein to refer to the various compounds, including antioxidants, antioxidant precursors or lignans which may ultimately provide antioxidative activity in the sesame oil.

Before describing suitable method guidelines in accordance with an embodiment of the invention for preparing a dedicated sesame oil, it is important to understand the nature and distribution of the antioxidant agents contained in the seeds prior to oil extraction. The various antioxidant agents contained in sesame seeds include antioxidant precursors, predominantly sesamin and sesamolin, trace amounts of sesamol, an active antioxidant, and other minor lignan phenolic analogues, including sesamolinol and sesaminol. Some researchers have suggested that sesame oil may possess other potent antioxidant components yet to be discovered. Commercially available sesame seeds typically contain sesamin in a range of 200 to about 1000 mg and sesamolin in a range from about 300 to about 600 mg per 100 g of seed. Sesamol is only present in a concentration of about 0.5 mg per 100 g of seed.

Levels of antioxidant agents present in crude, unroasted sesame oil extracted from the seeds of *S. indicum* vary widely, with typical sesamin concentration ranging from about 700 to about 1130 mg, and sesamolin from about 200 to about 600 mg per 100 g oil. Sesamol is present in very small amounts, but appears to be generated from sesaminol, and probably from sesamin, during conditions of processing. For example, oils extracted from roasted sesame seeds may contain levels of sesaminol ranging as high as about 3 mg to about 6 mg per 100 g oil.

Commercially available sesame oil contains significantly lower concentrations of antioxidant agents than the crude seed-extracted sesame oil of which it is a refined product. The apparent disappearance of these precursors and other antioxidants which may play a role in imparting stability may be due to a number of contributory factors. For example, levels of some of the antioxidant agents are diminished in the decortication of the seeds, since they are present in most abundant concentration near the hulls. This has been demonstrated by measuring the difference in stability of the oil extracted from whole seeds versus dehulled seeds. In commercial applications the sesame seed is invariably pressed and not solvent extracted. For example, refined, bleached and deodorized sesame oil, generally only available in health stores, is often labeled as the product of the "first press. " As will be shown later, the antioxidative potential of this oil is very limited, and it is thus thought to be a poor medium for frying. A theory that the antioxidant components function to protect the plant from oxygen penetration from the outside may offer explanation of their presence mainly near the hulls.

Another loss of the remaining antioxidants occurs in the extraction of the oil by pressing, where lignans and other antioxidant agents are abundant in the meal remaining after pressing, normally used for cattle feed. As presented in a paper published by the researchers who have assisted with this invention (Kamal-Edlin A. and Appelqvist L.A., The Effects of Extraction Methods on Sesame Oil Stability, JAOCS, Vol. 72, no. 8, pp 967-969), the presence of these high concentrations of antioxidant factors in the meal is substantiated by a subsequent solvent extraction of the meal following pressing. The meal after pressing may contain up to 20 % oil, but after a subsequent solvent extraction only 0.5%.

Despite loss of antioxidant potential during pressing, some powerful antioxidant components nevertheless remain in the pressed oil. These are substantially diminished in the subsequent refining process. This has been documented by Fukuda et al. in a paper from August 1986 (JAOCS, Vol. 63, no 8, pp 1027-1031) from which the following table 1 has been taken:

**TABLE 1**

| Amount of Lignans and Tocopherol in Unroasted Sesame Seed Oil During Refining Process (mg/100 g Oil) | | | | | | | |
|---|---|---|---|---|---|---|---|
| Oil no.^{a} | (+)Sesamin | (+) Episesamin | Sesamolin | Sesamol (its dimer) | Sesaminol (P3) | Episesaminol | γ-Tocopherol |
| 1^{b} | 813.3 | 0 | 510.0 | 4.8 (0) | 0 | 0 | 33.5 |
| 2 | 730.6 | 0 | 458.0 | 2.5 (0) | 0 | 0 | 23.4 |
| 3 | 677.8 | 0 | 424.8 | 0.7 (0) | 0 | 0 | 22.6 |
| 4 | 375.5 | 277.6 | 0 | 46.8 (trace) | 38.9 | 48.0 | 21.8 |
| 5 | 258.3 | 192.6 | 0 | 1.7 (trace) | 28.4 | 34.3 | 15.4 |

| | | | | | | | |
|---|---|---|---|---|---|---|---|
| ^{a}1, crude; 2, alkali·refined; 3, washed with warm water; 4, bleached; 5, deodorized . Amounts of antioxidants, sesamin and episesamin were analyzed by HPLC as described in the text. | | | | | | | |

The sesamin was reduced from 813.3 to 258.3 mg per 100 g of sesame oil during the refining process. Another important precursor, sesamolin, disappeared completely. The concentration of the antioxidant γ-tocopherol was reduced from 33.5 mg to 18.4 mg per 100 g. It is interesting to note from this paper that during the bleaching the precursors were transformed into 46.3 mg sesamol and 33.9 mg sesaminol which have active antioxidative capacities. However, the sesamol almost disappeared, and the sesaminol was significantly reduced in the subsequent deodorization process.

The many other scientific papers which have dealt with the antioxidative potency of sesame oil have, as a rule, used one of the following methods to test the stability of sesame oil and mixes with sesame oil and other oils:
A.O.M. method - heating to 98°C
Rancimat method - heating to 110-120°C
Schaal oven test - heating to 60-70°C
Oxygen bomb test (ASTM) - heating to 99°C
For the purpose of this invention, however, it has been found that most of the active antioxidants contained in sesame oil, except γ-tocopherol, are not detected before the temperature of the oil reaches 160°C coupled with hydrolysis, as with the presence of potatoes, just as had been found by Fukuda et al. *Supra.*

With the above considerations in mind, extraction and refinement methods which include as a common primary goal the preservation of antioxidant agents in the sesame oil, are essential in providing a dedicated sesame oil within the preferred context of the invention. Moreover, in contrast to prior art refinement methods in which the antioxidant precursors are converted to active antioxidants, such as sesamolin, for example, during the bleaching process, a "dedicated" refinement process is advantageously directed to production of a sesame oil in which the precursors, remain in bound form, for example, as sesamin and sesamolin. This feature, it is believed, will allow actual antioxidants to gradually develop from the precursors during actual frying. The extraction and refinement processes mentioned above are collectively referred to herein as "preparation" of the oil, suitable method examples for which are described, which have been found to achieve the advantages in accordance with the invention in economically practicable embodiments suitable for commercial application.

As suggested by the data in table 1, the main losses in antioxidative potential during the refining are believed attributable in part to each of the various steps including alkali refining, alkali bleaching (which is however counteracted by conversion of the precursors to actual antioxidants), and deodorization, where the most potential antioxidant, sesamol and its dimer practically disappear, and in which sesaminol (which is believed to provide a great contribution in thermal stability because of the slow degradation in the frying process) is reduced from 33.9 mg to 28.4 mg. These factors are believed responsible for the relatively small antioxidative potential of refined, bleached and deodorized sesame oil as compared with the originally extracted oil. Furthermore, it is likely that the original sesame oil in the experiment yielding the results shown in table 1 did not have ideal antioxidant potential due to the particular selection and extraction procedures utilized, although insufficient data is available to confirm this suspicion.

A further object is a Method for the production of an edible oil composition, comprising a major proportion of a bulk oil having triglycerides, total fatty acid moieties of which are predominantly monounsaturated fatty acids and a first minor proportion of sesame oil, characterized in that the sesame oil is obtained by using the following process steps in the order of:
a) screening of sesame crops or seeds to provide those richest in antioxidant factors,
b) preheating the sesame seeds to 80-105°C for 30-120 minutes prior to extraction to increase the antioxidative potential in the oil product,
c) press extracting or solvent-extracting the sesame seeds for maximizing the concentration of lignans in the crude oil,
d) refining and/or bleaching with methods which minimize the loss of antioxidant potential,
e) omitting deodorization or carrying out only marginal deodorization by heating to less than 109°C for a period of 2 hours at minimal pressure.

Therefore, preparation procedures which are practiced to obtain dedicated sesame oil in accordance with the invention will advantageously account for as many of the following criteria as practicable, including screening of sesame crops to provide those richest in antioxidant factors, extraction techniques for maximizing the concentration of lignans in the crude oil, and appropriate selection of methods carried out in the respective steps of refinement, bleaching and deodorization which minimize the loss of antioxidant potential. These will be addressed in detail below, as they relate to practical embodiments disclosed herein.

### Screening:

As pertaining to the criterion of screening, a number of tests have been done by the inventor with sesame seeds from many origins in various parts of the world. Although it is reasonable to expect that the ideal sesame seeds that presently exist from the standpoint of antioxidant potential might not have been included in those studied, it is believed that some had a higher potential than those used as basis for table 1. It is therefore deemed advantageous that a variety of sesame seeds that has the highest antioxidative potential be selected as raw material for the dedicated sesame oil. In this regard, sesamolin, which has been proven to be an important element as a precursor for antioxidative potential, should be included in such analysis. It is also most probable, that another precursor, sesamin, reacts in a manner similar to sesamolin in creating antioxidants during frying, and further study of this potential may also increase the value of the invention. Content analysis used in selection of the raw seeds should therefore advantageously include as a criterion levels of sesamin, along with sesamolin, and is therefore also contemplated within the scope herein. Levels higher than 500 mg per 100 g of seeds for each are deemed advantageous. Plant breeding for increased sesamolin and sesamin content may further provide a means by which the value of this invention may be increased, and is therefore also contemplated. Furthermore, it is possible that additional antioxidants and precursors thereof may be later discovered and, thus, their inclusion in the sesame crops selected and their subsequent preservation during the refinement steps is also deemed advantageous to the invention. For example, it has been suggested by some researchers (Fukuda, Kamal-Eldin and Yamashita et al., *supra*) that there may be additional sesamum lignans with similar properties, yet to be discovered, which would further explain the unusual synergistic effect of sesame oil when mixed with other oils.

### Preheating of the Seeds:

Preheating the sesame seeds prior to extraction is thought to increase antioxidative potential of the oil product. However, since roasting the seeds at temperatures in excess of 110° C may undesirably change the flavor of the subsequently extracted oil as a consequence of a resultant Maillard reaction, care must be taken not to attain the temperature at which such reaction occurs. Preheating is therefore carried out at temperature in a preferred range from about 80° to about 105° C, for a preferred period of time ranging from about 30 minutes to a period in excess of about 2 hours. The moisture content of the seed preferably does not exceed 6%. The temperature and length of time ideally selected within these ranges will depend upon the extraction process subsequently employed, as described in greater detail below. For example, where the oil is expelled by a press extraction method, the seeds are advantageously heated at temperatures above 90° C for a period of time ranging from about 90 minutes to 2 hours or more. Where the oil is solvent extracted, the temperature and period of time required for achieving the advantages in accordance with an embodiment of the invention are generally less than for press extracted oil. For solvent extracted oil, temperatures in a range of about 80° to about 95° C for a period of time as short as 30 minutes have been shown satisfactory.

### Extracting:

Because the antioxidant agents are more abundant near the seed hulls, solvent extraction yields an oil having a greater antioxidative potential than does expelling, i.e. press extraction. Although hexane, a common solvent used for oil extraction, is satisfactory for purposes of the present invention, the solvent is advantageously an alcohol such as, for example, ethyl, methyl or isopropyl, insofar as findings suggest that alcohols are better at preserving the phenolic lignans. It is noted that because solvent extraction is more efficient in extracting an oil having higher antioxidative potential, screening of the seeds is a less important consideration with regard to solvent extracted oil than one obtained by a press extraction. At present, solvent extraction is not yet economically feasible because of difficulties of refinement. However, as these problems will likely be overcome with continued research, solvent extraction of oil is the preferred extraction process embodied within the scope of the invention.

Until such time as solvent extraction can provide an economically practicable means for deriving sesame oil, press extraction, also referred to as expelling, provides at present the usual, and acceptable, method for extraction.

### Refining:

Degumming of the extracted oil may be carried out in a typical fashion, i.e. at a temperature of about 70° C while the oil is sprayed with hot water comprising about 7.5% by weight of the oil. The oil is then centrifuged to break the emulsion formed during the degumming operation.

Since alkali-refining is thought to contribute to the loss of antioxidant agents, this procedure should advantageously be substituted with another less destructive refinement procedure. In an embodiment in accordance with the invention, employing acid-refining in place of an alkali-refining process has been shown to reduce the loss of antioxidative potential. Acid refining, although not a new refinement technique, is believed not to have heretofore been implemented for the purpose of minimizing the loss of antioxidative potential.

### Bleaching:

Similarly, the step of bleaching, shown to adversely affect antioxidant potential when practiced in accordance with the usual alkali-bleaching process which uses neutral clay or caustic lye, should advantageously be replaced by other techniques which are less destructive to the antioxidant agents. In an embodiment in accordance with the invention, acid-bleaching with acid clay was shown to provide additional gains in antioxidative potential, and although not a new procedure, is believed not to have been heretofore used to achieve the end embraced herein.

### Deodorization:

The most spectacular gains, however, in preserving antioxidative potential of the dedicated sesame oil are attributed to a change in the deodorization approach. Since a great many of the antioxidant agents are lost or rendered ineffective during deodorization, this step is advantageously either performed only marginally, or omitted entirely. The purpose of the usually practiced deodorization step is to remove off-odors and flavors in the already semi-refined oil. Deodorization also functions to remove possible residues of pesticides in the oil. During conventional deodorization, hot vapor is typically blown through the oil under vacuum [about 4-13,33 mbar (3-10 mm Hg)] and the temperature is, as a rule, between 200 - 250°C.

The removal of off-odors and flavor is of particular importance when the refined oil is used in unadulterated form, and of less importance if it is to be added in minor quantities to a bulk oil. In organoleptics there is generally a concentration "threshold" below which a semi-trained taster cannot detect a difference in flavor. Studies show that when the level of undeodorized sesame oil is kept to under 6% when mixed with HOSO, a semi-trained taster (as for example the sous-chefs in restaurants) cannot detect, whether deodorized or undeodorized sesame oil is used in preparation of the oil mixture. The addition of a third component oil in the range of 5% or more to the mixture, the third component oil consisting of refined, bleached and deodorized rice bran oil, the nature of which is more fully described below, was quite unexpectedly shown, in addition to other benefits provided, to have a neutralizing or positive effect on the sesame oil threshold, which then tended to be as high as about 8 % or above. Although these cited figures are not exact or scientifically proven, they may serve as a good indication of the principle.

### Removal of Pesticides:

Since the traditional step of deodorization is advantageously omitted or at least modified for purposes of minimizing undesirable removal of antioxidant agents, an alternate means should be used to ensure the absence of pesticides where any residues thereof have not already been removed as a consequence of previously performed refining steps, particularly the step of bleaching. To this end, in the long term, the ideal solution is to use sesame seeds that have been grown without the use of pesticides. Until this solution becomes commercially practicable any pesticides present in the sesame oil may be removed by heating the oil to a temperature between about 90° and about 105°C, and preferably no greater than 109° C, for approximately two hours with minimal pressure. Subsequent head space analyses, measuring down to 1 part per 100 million did not detect any pesticide residues. However, in practice should pesticides be detected, the period of treatment should be prolonged, at an optional low pressure. This is only one possible embodiment for pesticide removal. It is recognized that the disclosed method may be improved in practical application, and that other alternative methods to remove pesticide residues may be developed which do not adversely affect antioxidative potential. The matter is only mentioned in order to emphasize that it is necessary to address this problem where deodorization is not used and where sesame seeds grown without the use of pesticides are not yet available.

### Composition:

The refined dedicated sesame oil as defined herein includes the lignans, such as, for example, sesamin and sesamolin, in concentrations higher than present in normally refined, bleached and deodorized sesame oils. Sesamin is preferably present in a minimum concentration of about 200 mg per 100 g oil, and/or sesamolin in a preferred minimum concentration of about 300 mg per 100 g oil. As sesame seeds are a natural commodity, depending on various factors including crop variations, seasonal factors, etc., the range of lignans present in a dedicated sesame oil is believed to range from the minimum stated values, up to about 1000 mg per 100 g oil or above for each. A dedicated sesame oil, although not necessarily limited to any particular ranges of other remaining lignans and antioxidant agents, preferably includes these compounds in the following ranges considered advantageous: sesamol, 50-550 mg per 100 g oil; sesaminol, 100-600 mg per 100 g oil; sesamol dimer, 100-600 mg per 100 g oil; sesamol dimer quinone 100-600 mg per 100 g oil; and *epi*-sesaminol, 100-600 mg per 100 g oil.

In conducting the tests to determine the viability of the invention, which will be discussed in detail below, the dedicated sesame oil prepared from a particular crop of sesame seeds was used in a preferred range of proportional concentration between about 2% and about 6% of the total oil composition. However, as lignan and other antioxidant content may vary from crop to crop, it is important to understand that preferred proportional ranges of the dedicated sesame oil are difficult to predict prior to analysis of a particular crop.

It is noted that the method considerations regarding preparation of a dedicated sesame oil specifically set forth above are provided for purposes of fully disclosing the invention and to provide those skilled in the art with sufficient enabling disclosure to practice the invention. A number of alternative approaches to dedicated sesame oil extraction and refinement will likely also result in a sesame oil product which retains as components therein a sufficient concentration of the antioxidants and antioxidant precursors to achieve synergistic stability-imparting effects to a bulk oil with which it is mixed, and oils prepared in accordance with these refinement processes are also contemplated within the scope of the term "dedicated sesame oil" for purposes of the invention.

It is further noted that, of the aforementioned steps in the described sesame oil preparation embodiment, the steps of bleaching and deodorizing are the two most important contributing factors to the final concentrations of antioxidant agents in the refined oil. Therefore, it is considered particularly advantageous to use acid bleaching in place of alkali bleaching, and to perform same under less pressure than in a conventional bleaching procedure. Similarly, as present techniques of deodorization diminish the antioxidant potential of the sesame oil, it is considered particularly advantageous to skip this step in preparing the dedicated sesame oil. However, it is recognized that technological advances may, in the future, permit deodorization by a process which does not result in significant losses of antioxidant agents, and therefore a deodorized sesame oil produced in accordance with such process is also contemplated herein within the scope of the term "dedicated."

The following two examples are offered to further illustrate possible methods of dedicated sesame oil preparation, considered illustrative of various embodiments. It will be understood that they are in no way intended to restrict the invention disclosed herein, but rather to extend the scope of the foregoing disclosure and the claims which follow.

### EXAMPLE 1 - Solvent Extraction

In a solvent extracted sesame oil, the following steps supplement or replace conventional refinement techniques. If a step is not mentioned below, standard refinement practices are followed.
1. Seeds are preheated to approximately 80° C for a period of about 30 minutes prior to solvent extraction using isopropanol.
2. Oil is acid bleached.
3. Deodorization is not performed.
4. Pesticides are removed by heating the oil to 105° C without pressure for about 2 hours.

### EXAMPLE 2 - Press Extraction

In an expelled, or press extracted sesame oil, the following steps supplement or replace conventional refinement techniques. As with example 1 above, if a step is not mentioned below, standard refinement practices are followed.
1. Seeds are screened for sesamin and/or sesamolin content greater than 500 mg per 100 g of seed.
2. Seeds are preheated to approximately 100° C for a period of about 2 hours prior to press extraction.
3. Oil is acid refined.
4. Oil is acid bleached.
5. Deodorization is not performed.

In a further embodiment in accordance with the invention, one or more of the sesame antioxidant agents, including, for example, the lignans sesamin and sesamolin, may be added to the bulk oil in quantities effective for imparting antioxidative activity thereto, in place of or in addition to sesame oil. The agents would either be derived synthetically or extracted by a suitable process from sesame oil rich in such lignans, such as crude or dedicated sesame oil. When both of the lignans sesamin and sesamolin, presently deemed of particular importance in imparting antioxidative activity to the oil composition are added together to the bulk oil, sesamin will be in a preferred range of from about 2 mg to about 100 mg, and sesamolin in a preferred range from about 1 mg to about 100 mg, based upon 100 g of bulk oil. More preferably, these ranges are between about 4 mg and about 80 mg for sesamin and about 3 mg and about 60 mg for sesamolin. Most preferably, the ranges are between about 25 mg and about 45 mg of sesamin and between about 20 mg and about 40 mg of sesamolin, based upon 100 g of bulk oil. Other antioxidant agents present in sesame oil before or after being challenged may optionally be added to a bulk oil, including sesamol (10-80), sesaminol (50-150), sesangolin (70-200), and 2 *epi*-sesalatin (200-1000), preferred ranges in mg per 100 g bulk oil indicated in parentheses. The extent to which other known or yet to be discovered antioxidative agents present in sesame oil contribute to stability of the oil is to be determined. However, they can be optionally added to a bulk oil in preferred ranges proportional to their presence in dedicated sesame oil in concentrations within the advantageous ranges stated above, commensurate with the expectation of providing a contributory function in prolonging oxidative stability.

### Optional Third Oil Component:

As an optional embodiment in accordance with the invention, a minor portion of a third oil may be added to the bulk oil/dedicated sesame oil mixture for additional benefits. The oil is advantageously selected from a group of suitable edible oils rich in Δ-5 avenasterol content, a sterol compound shown to be an active inhibitor of polymerization. (Gordon M.H. and Magos P., The Effect of Sterols on the Oxidation of Edible Oils, Food Chemistry, 10, 141-147 (1983); Idem, Products From the Autoxidation of Δ-5 Avenasterol, Food Chemistry 14, 295-301 (1984); Sims et al., Sterol Additives as Polymerization Inhibitors for Frying Oils, J Amer. Oil Chem. S., 49, 298-301 (1972); and White P. and Armstrong L.S., Effects of Selected Oats Sterols on the Deterioration of Heated Soy Bean Oil, JAOCS, 63, (4) 525-529 (1986). As noted above, an oil having a high content of linolenic acid (C18:3) or linoleic acid (C18:2) would be disqualified for use in frying for many reasons, one of them being the rapid formation of polymers during frying. Oils with moderate contents of monounsaturated fatty acids are less vulnerable to polymerization, but the high degrees of unsaturation referred to, from 70% up to 90% or more for the bulk oil used herein, may nevertheless result in polymer formation when used for frying. Polymerization is a chemical process in which low molecular components, i.e. monomers in unsaturated oils, are converted into high molecular ones, including dimers, trimers or higher polymers, under the influence of high temperatures. Health risks associated with ingestion of polymers are uncertain. They may pass untreated through the digestive system and as a consequence potentially cause gastrointestinal distress including diarrhea. However, in some countries it is unlawful to fry in an oil that contains polymers in a percentage greater than a prescribed limit. For example, the maximum allowable polymer content in Belgium is 10%, and in Holland, 16%. In all European countries their appearance in oil is restricted, inasmuch as they are one of the major factors included in a classification referred to as "polar components," the content of which, in used frying oil, is restricted to 24-27% in the various countries. As polymers are not triglycerides, and thus not oil, their excessive appearance in frying oil might also fall under legislation regarding adulterated food in the United States. Another disadvantage brought about by polymerization of a frying oil is that polymers tend to stick to the frying vats as a gum-like substance which is very difficult to remove by a normal cleaning process. Therefore, if an oil composition high in monounsaturated fatty acids is to be considered commercially suitable for professional frying, an inherent characteristic inhibiting formation of polymers is considered particularly advantageous to the invention.

One such oil which may provide such benefits is rice bran oil, shown to have an exceptionally high content of Δ-5 avenasterol as demonstrated below in table 2.

**TABLE 2**

| (Source: Weihrauch and Gardner: Sterol Content of Foods of Plant Origin, J Am. Diet. Assoc. July 1978, 39-47.) Sterols in Vegetable Oils (mg/100g oil) (Weihrauch & Gardner, 1978) | | | | | | | | | |
|---|---|---|---|---|---|---|---|---|---|
| Oil | Total sterols | Cholesterol | Brassicasterol | Campesterol | Stigmasterol | β-sitosterol | Δ⁵-avenasterol | Δ⁷-stigmasterol | Δ⁷-avenasterol |
| Corn | 1390 | - | t | 259 | 98 | 986 | 36 | 11 | t |
| Olive | 232 | - | - | 7 | 3 | 202 | 20 | t | t |
| Palm | 117 | 5 | t | 23 | 14 | 72 | 2 | - | - |
| Rapeseed | 513 | 3 | 55 | 156 | 2 | 284 | 13 | - | - |
| Rice bran | 3225 | - | - | 658 | 252 | 1745 | 355 | 71 | 142 |
| Soya bean | 327 | - | - | 68 | 64 | 183 | 5 | 5 | 2 |

| | | | | | | | | | |
|---|---|---|---|---|---|---|---|---|---|
| t = trace | | | | | | | | | |

The world production of rice amounts to approximately 500 million metric tons, accounting for about 1/4 of all cereal grains production. Rice bran, from which rice bran oil is derived, is the part between paddy husk and endosperm representing 10% of the rough rice kernel and is obtained during polishing of rice. Rough rice consists of about 20% hulls and 10% bran. The bran layer contains almost all of the oil found in rice. Clean rice bran contains 18-20% oil.

From the above rice production figures, the world theoretical potential for the production of rice bran oil would be some 9,000,000 tons (500 million tons x 10% bran x 18% oil content). At present, rice bran oil is a rare and unconventional oil, sparsely known in the Western world, except perhaps in health food stores. World production of rice bran oil of an edible and industrial grade is estimated at 450,000 tons. Japan has an annual production of 100,000 tons. India produces 150,000 tons of which only 15,000 tons is of edible grade. Other producers of rice bran oil include China, Korea, Pakistan, Taiwan and Thailand. The chemical, nutritional and toxicological properties of rice bran oil have been studied and reported. (Rukmini C., Chemical, Nutritional and Toxicological properties of Rice Bran Oil, Food Chemistry, 30, pp 257-68 (1988)).

Some scientific papers refer to the antioxidant properties of rice bran oil, in particular with regard to the sterols contained in this oil, and some have suggested that they can be used to stabilize, for example, a soya bean oil. The effects demonstrated appear, however, to be too small for any commercial consequences pertaining to frying, particularly with a polyunsaturated fatty acid oil. The antioxidative benefits which were shown to extend shelf life may at least provide explanation as to why mixing with the other two component oils in accordance with the invention does not, at least not significantly, reduce the stability of the total composition, which might otherwise be anticipated from the fact that rice bran oil includes as much as 34% linoleic acid content, and 1% of the most vulnerable polyunsaturate, linolenic acid.

Other oils comparatively rich in Δ-5 avenasterol may be substituted for rice bran oil for use as the optional third constituent oil. For example, oat germ oil has been shown to also provide powerful antipolymerization activity. Wheat germ oil, also rich in Δ-5 avenasterol may similarly be used as the optional third oil component. It is noted that the terms "rich" or "high" in Δ-5 avenasterol are defined herein as an oil containing a minimum level of Δ-5 avenasterol of about 50 mg per 100 g oil. Oat germ and wheat germ oils each include levels of Δ-5 avenasterol in concentrations ranging from about 50 to about 150 mg per 100 g oil. Rice bran oil is typically higher in Δ-5 avenasterol content, ranging from about 200 to 400 mg per 100 g oil, with a typical concentration at about 350 mg per 100 g oil, and its use is therefore deemed advantageous to the invention. (If the rice bran oil is refined, the concentration of Δ-5 avenasterol therein would be lower.) As noted above, the optional third constituent oil is added to the bulk and sesame oil mixture in a range from about 0.5 to about 10%. For a rice bran oil having a typical concentration of Δ-5 avenasterol, the oil is added to the oil composition in a preferred range from about 1.5 to about 4%. In rare cases, where the concentration of the Δ-5 avenasterol in the rice bran oil is unusually low, the upper limit of the range may be as high as about 6% to about 8% based upon the total weight of the oil composition. If unrefined rice bran oil is used, the quantity can be reduced to 5% or less. Oat germ and wheat germ oil, lower in Δ-5 avenasterol content, require a proportional addition to the oil composition in a range believed as high as 10% in order to achieve the same polymerization protection.

The health aspects of rice bran oil and oat germ oil have also been documented. A blind, crossover clinical study has indicated that both rice bran and oat germ reduced serum cholesterol in humans by 7% (Hegsted D.M. et al., Quantitative Effects of Dietary Fat on Serum Cholesterol in Man, Am. J of Clin. Nutr. 1965, 17:281-295). Similar results were obtained in a free living intervention study. This study also showed that the reduction seemed to occur primarily in the LDL Cholesterol. (Gerhardt A and Gallo N.B., Food Chemistry News, November 13, 1989).

It is noted that several components of rice bran are believed to affect serum cholesterol. For example, defatted rice bran is not as active in lowering serum cholesterol as rice bran including rice bran oil. This suggests the oil fraction of rice bran is the active constituent.

### Testing:

Tests conducted to determine the stability of the oil composition in accordance with an embodiment of the invention will now be discussed in detail. Traditional analytical methods used for obtaining empirical data relating to stability, such as A.O.M., Rancimat tests, etc., which employ temperatures well below actual frying temperatures as previously described herein, were ruled out for failing to provide sufficiently relevant data in the present instance. The invention is particularly directed to an oil composition which demonstrates stability under conditions of professional frying or other like applications and it is suggested that active antioxidants in the composition are created during actual frying of food, such as, for example, potatoes. As a research laboratory is not useful for actual frying and evaluating the organoleptic qualities of the products in order to determine the end point of the oil, i.e. the point at which degradation of the oil exceeds an acceptable level, another approach to analyzing the oil is used.

Efforts aimed at optimizing the proportion of bulk oil and the constituent oil or oils were conducted in a restaurant kitchen in Sweden, prior to testing. After months of trials, a preferred combination was arrived at. It includes 94% HOSO, 4% dedicated sesame oil and 2% rice bran oil. However, all possible combinations of the inventive oil composition were not tested. Accordingly, the inventive oil composition is not limited to the preferred example, since other compositions within the scope of the invention are believed to provide optimal characteristics.

The dedicated sesame oil used for the experiments was prepared in accordance with the following procedures. Seeds were screened for content of sesamin and sesamolin in excess of 500 mg per 100 g. The seeds, having a maximum moisture content of 6% were preheated to about 90° C for a period of about 45 minutes prior to press extraction. Acid bleaching was used in place of alkali bleaching. The step of deodorization was omitted, pesticides being removed by heating the oil to about 90° C for about 2 hours.

The nature of the present invention required that testing be conducted in a restaurant type of operation, yet under proper laboratory conditions to insure the integrity and credibility of the test results. A regulatory authority in Germany, Chemisches Untersuchungsamt, Hagen, is responsible for the supervision and control of oils and fats for the Federal Republic of Germany. This institution was consulted regarding the testing of the inventive oil composition and conducted testing of the inventive oil composition at the inventor's direction. The head of this institution, Dr. Chr. Gertz, is a co-author of the scientific papers upon which the valid regulations, now applied in most countries of the European Union, are based. The regulatory authority agreed to conduct the test, on condition that they be allowed to design and supervise the test-kitchen operation which was used for the actual frying of potatoes.

The following is a description of the test kitchen design and the nature of the testing performed therein. The end point (which marks the end of the period of use of the oil, also known as degradation) of the oil composition to be tested versus a control oil during actual frying was determined by organoleptic studies. The test kitchen was installed as part of a gourmet type of restaurant in Belgium and an experienced kitchen-chef and his sous-chef were chosen to judge when the endpoints were reached. The professionals used conventional criteria employed by the restaurant for deciding the end point of the regularly used oils. These criteria include: color of the fried potatoes, color of the frying oil, flavor and crispiness of the potatoes, the apparent greasiness of the potatoes, whether the oil starts to foam, whether the oil starts to smoke, and change in oil viscosity. In particular, as degradation of the oil progresses during frying, the color of the potatoes and of the oil darkens. Beyond a certain period of use, flavor and crispiness begin to suffer, and the fries start to absorb too much oil and appear greasy. Foam arising from the evaporation of water has a different appearance than foam created in the initial stage of oil deterioration, the bubbles being smaller in the latter case. Professionals generally do not rely on the smoke point or increase in oil viscosity to signal the end point, since one of the other end point indicators would earlier indicate unacceptable degradation. It is noted that none of the oil samples which reached a usable end point exceeded the regulated limit in Germany which is 24% (TPM) Total Polar Material (in Belgium it is 25 %) when tested.

The test kitchen was installed in a separate area of a working kitchen in a gourmet restaurant in Belgium, and was equipped with five new fryers of the brand *Fritel,* manufactured by the Aro Company, Switzerland. The useful capacity of the fryers was 3.5 liters and the electrical power 2.5 kW. The frying personnel were supervised by the kitchen chef and his sous-chef. They judged the degradation of the oil based upon the above mentioned criteria, which are the same used in their daily work. The thermometer used to check the temperature in the fryers, and thus the reliability of the thermostats, was a professional digital thermometer, obtained from Atkins Co., Gainsville, Florida, with a guaranteed maximum deviation of 1°C. The temperature of the fryers was regularly checked and the thermostats corrected if necessary.

The fryers were filled with 3.5 liters of oil and potatoes were fried for five hours every day. The temperature of the oil used for frying was 175°C. The potatoes were taken from the refrigerator, initially at a temperature of about 8°C. Each frying portion consisted of 100 grams of potatoes. When the potatoes were lowered into the fryer, the temperature of the oil fell to 163°C but recovered to the set 175°C after 10 seconds.

All oils used as a control in the testing were supplied by Félix Marchand, France, a major oil supplier, subsidiary of Cargill Inc., and delivered in 5 liter yellow plastic containers of the same type used for their usual oils. As for the oil composition in accordance with the invention herein, it too was supplied in the same type and color of container as the ones used for the control. It consisted of 94% HOSO of the brand "Laurasol," which, according to the information from the supplier, was delivered as crude oil from the SVO company in the USA (where it is marketed under the "Trisun" brand and manufactured under U.S. Patent No. 4,743,402), and refined in Europe. The mixture further included 4% weight of dedicated sesame oil, manufactured in Germany in cooperation with Henry Lamotte G.m.b.H., Bremen, and 2% rice bran oil.

A label with a control number was the only means for distinguishing the containers. The oils used for control include the following:
1. 100 % HOSO of the same type as described above, from Felix Marchand, France under the brand name "Laurasol."
2. Normal ground-nut oil of the brand "Lamotte," from the Lamotte Company, Bremen Germany.
3. 100 % double fractionated palm oil under the brand "Frilette Long-Life" (hereinafter "Long-Life") from Frilette Europa ApS, Copenhagen and manufactured by Aarhus Oliefabrik, Denmark.
4. A partially hydrogenated rape seed oil (canola oil) from Procordia Food AB, Sweden, also under the brand name "Frilette Long-Life" (hereinafter "Long-Life") and manufactured by Karlshamn AB, Sweden..
5. A partially hydrogenated canola oil under the brand name "Fry-Well," from the Rykoff-Sexton Company, Indianapolis, USA. According to the label this oil contained methyl silicone.

As organoleptic tests were to be conducted, and because most restaurants and fast food operations including the restaurant in which the tests were to be performed typically use potatoes that have been pre-fried and later deep-frozen or delivered fresh under refrigeration, pre-fried potatoes were initially used for test purposes. They were delivered from a Belgian wholesaler, Rookoetje B.V., and although the brand of the oil used for pre-frying is unknown, later analyses demonstrated that this oil was in all likelihood a partially hydrogenated one. As it is of special interest for this invention to claim a health benefit associated with use of the oil composition, tests were also made using fresh cut potatoes from the same supplier that were pre-fried in the test kitchen and then refrigerated until the tests were conducted less than a week later. For control purposes, fresh potatoes were also pre-fried in 100% HOSO and then fried again in 100% HOSO. Thus the efficacy of the new oil could clearly be established and quantified.

As noted, the fryers were initially filled with 3.5 liters of the respective oils. After completion of daily frying, but never in between, the fryers were again filled up to the 3.5 liter mark, and actual oil loss in the frying vats was duly recorded. Since oil does not evaporate, the loss can be estimated to be approximately equal to the oil absorption into the fried potatoes. The kitchen-chef made a written report about his observations during the frying of the various oils and his particular reason for choosing a certain endpoint. These reports are referred to using the term "test kitchen report."

Samples were taken from the fryers, always at the end point, sometimes after 30 hours or 40 hours. For the final frying of the potatoes that had been both pre-fried and then fried again with the hereinabove refered to oil composition in accordance with the invention, samples were taken after 35, 40, 45, 50, 55, 60 and 65 hours for the purpose of being able to make a degradation curve. Prior to analyzing, there was no way to predict with certainty whether the oil would pass the 24% Total Polar Material limit after being stressed under frying conditions for such long duration. All samples were taken threefold for the purpose of being able to triple check any results, should the samples be found within satisfactory limits. The samples were kept under refrigeration in the interim prior to analysis. The samples were then sent to Chemisches Untersuchungsamt, Hagen, Germany, who, for purposes of identification of the individual samples, had previously been given a control number key. Chemisches Untersuchungsamt regularly conducts tests on frying oils in various stages of degradation collected from food inspectors in Germany, and they regularly make their evaluations of TPM according to a generally accepted official method, UIPAC 2.507 (International Union of Pure and Applied Chemistry, Standard Methods for the Analysis of Oils, Fats and Derivatives, Blackwell Scientific Publications, Oxford, England, 1987).

As previously noted, no samples exceeded the end point of 24% TPM, which evidences the reliability of the criteria practiced in a gourmet type restaurant under professional surveillance, lending credibility to the test kitchen reports regarding the end points of all oils tested. The following table 3 lists the findings:

**TABLE 3**

| **Oil Type** | **End point hours** | **Criteria** |
|---|---|---|
| Groundnut oil | 15-20 hrs. | Greasy Fries, dirty heating cells |
| Fry-Well (pare hydr.canola) | 30 | Dark oil, dirty heating cells |
| 100% HOSO | 25-35 | Dark fries, then greasy fries |
| Long-Life (part hydr.canola) | 35-40 | Greasy fries |
| HOSO + HOSO | 35-40 | Darker fries, foaming |
| Long-Life (100% palm) | 40 | Slightly greasy fries |
| New oil + New oil | 65 | Foaming |

The Fry-Well brand rapeseed or canola oil contained, according to the label, methyl silicone.

HOSO + HOSO means that the respective potatoes had been pre-fried and then fried in 100% HOSO. New oil + New oil refers to the aforementioned oil composition in accordance with the invention, with both the pre-frying and the actual frying being made in this oil mixture. Based on the analyses from Chemisches Untersuchungsamt, it is probable that the potatoes fried in the control oils had been pre-fried in partially hydrogenated oil.

### Conclusions:

The results indicate a significant improvement of stability with the inventive oil composition compared with the traditional oils used as the controls, even oils with high levels of saturation and those which had been hydrogenated or to which silicone had been added. The new composition was also far superior compared with regular HOSO, which clearly indicates the efficacy of the composition in accordance with the invention. Thus, the stability of the inventive composition is attributed primarily to the use of the dedicated sesame oil. The contribution of the rice bran oil component is thought mainly to address the inhibition of polymer formation. However, it has also been found that rice bran oil significantly reduces serum cholesterol. (C. Rukmini, Food Chemistry, 30, 1988 p. 264). Accordingly, among the oils which will inhibit formation of polymers, it is preferable to use rice bran oil.

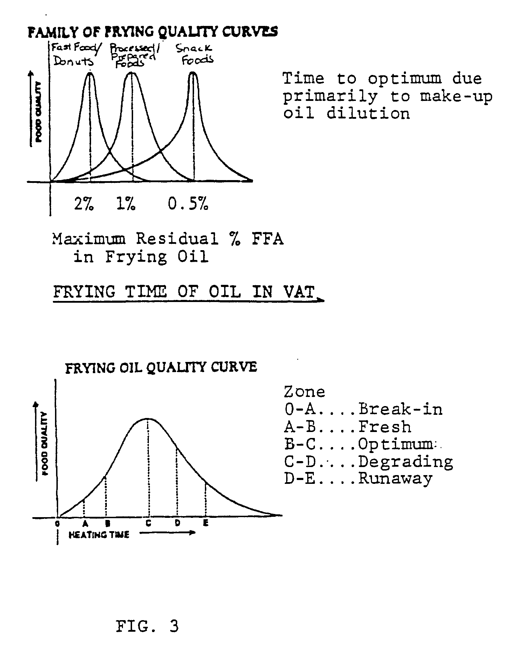

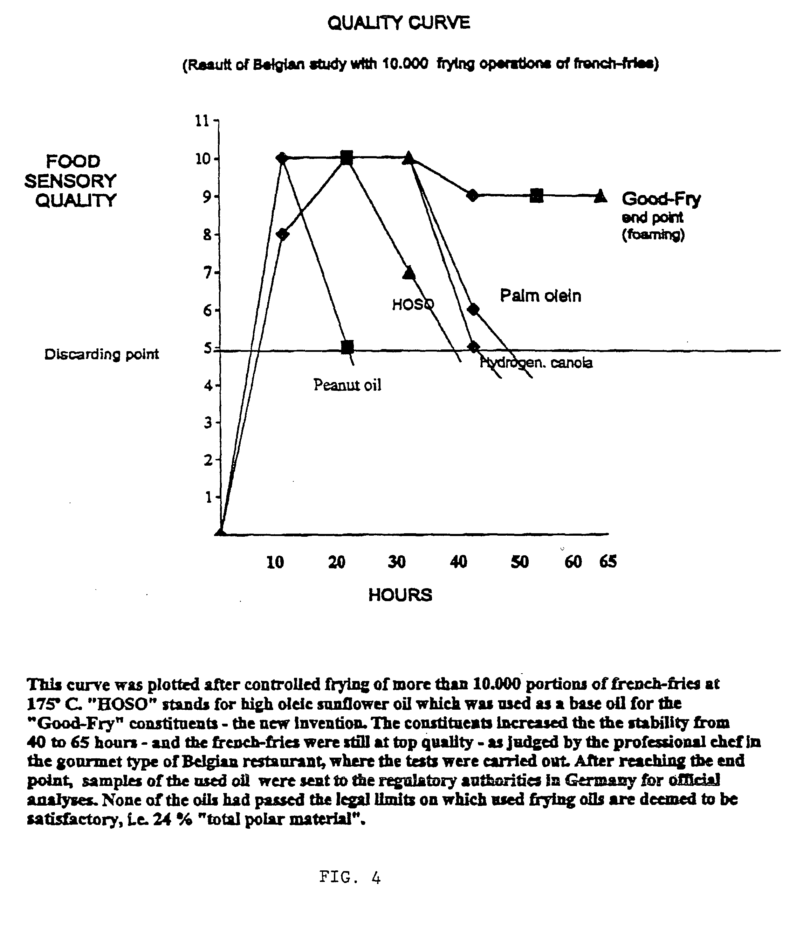

A feature of interest regarding the embodiment in accordance with the invention subject to the testing is the degradation curve for the oil composition. It is known among workers of the art, and demonstrated in a great number of papers, that as an oil reaches the end of its usable life, oil degradation proceeds at a rather rapid rate. This is apparent in a typical "bell-curve" of oil quality vs. time of use, for example of the type as shown in Fig. 3 (graphs taken from Stier R.F. and Blumenthal M.M., Quality Control in Deep-Fat Frying, Baking & Snack, February 1993). However, as samples were taken every five hours from 35 to 65 hours to test levels of TPM, such results indicate a flat "degradation curve" of essentially zero slope. In particular, analyses by the regulatory authority in Hagen, Germany indicate the change in TPM from 35 to 65 hours in 5 hour increments as follows: 22.4, 21.2, 21.9, 21.1, 23.2, 23.4, and 22.9. The value discrepancies are in most probability within an accepted margin of statistical deviation. The data therefore suggests virtually no apparent degradation, in the normal sense, over the entire 65 hour period of testing. The latest number, after 65 hours, was triple checked and consistently yielded the same result. Organoleptic findings from the above Belgium study, which appear as plotted data in a graph of Food Sensory Quality vs. Hours (Frying Time) in Fig. 4, further substantiate the above findings, and show a relatively flat degradation curve for the tested embodiment of the oil composition in accordance with the invention referred to as "Good-Fry."

It is noted that quality of food fried in the oil composition remained at a peak during the entire period of testing, prior to reaching the endpoint determined by a formation of foam. Accordingly, it is not known what would result if the frying continued beyond the foaming of the oil composition. However, an expected result is a sloping degradation curve, not unlike a typically expected degradation slope similar to those illustrated in Fig. 3, although perhaps not as steep as usually experienced, at least not until such point as the antioxidants would have lost their potency. This does not affect the conclusions drawn herein, i.e. the oil composition remains at peak quality for an unusually long time, and, as the foaming occurs prior to any detectable oxidation, there is little risk that an observant user of the oil would be exposed to a risk of using an adulterated oil for frying.

It is noted that although the above test refers to only one embodiment of the invention, consisting of 94% HOSO, 4% dedicated sesame oil and 2% rice bran oil, other proportional combinations, listed in the table below also demonstrated comparable stability. Only proportions of sesame and the optional rice bran oil are listed, the remainder of the compositions consisted of HOSO.

**TABLE 4**

| Proportional Content | |
|---|---|
| % Sesame Oil | % Rice bran oil |
| 5 | 5 |
| 3 | 5 |
| 1 | 5 |
| 5 | 1 |
| 3 | 3 |
| 4 | 2 |
| 1 | 2 |

### Additional Benefits:

It is noted that although the stability benefits provided by the oil composition in accordance with the invention are particularly useful in applications of professional frying, cooking and baking, where the oil is typically thermally stressed for prolonged periods of perhaps several days at extreme temperatures, the group of people who are consumers of oil for cold dishes, such as salad dressing, mayonnaise will still benefit from the increased resistance to auto-oxidation under normal conditions of storage, which feature dramatically increases shelf life, as well as the purported health benefits associated with inclusion of such oil composition in the diet, which are detailed below.

Whether used as a cold oil or as a cooking, frying or baking oil, the oil composition in accordance with an advantageous embodiment of the invention provides an alternative to other oils presently available and thought to have negative health implications. The oil composition described herein using an oil having a high degree of monounsaturation and produced without synthetic additives or hydrogenation, is comprised of constituent oils all thought to provide healthful metabolic reactions when ingested, in accordance with accepted medical findings. Individuals who have problems with their LDL/HDL cholesterol balance may, by virtue of the claimed edible oil composition, elect, on the basis of current health data, to use an oil which may lower the total cholesterol and improve the HDL/LDL ratio, i.e. an embodiment of the present invention.

The general recommendation for this group of individuals is obviously that they should reduce their consumption of all oils and fats as far as possible. The FDA has heretofore only allowed health claims for food that is particularly low in calories, because the main health problem in the U.S., as in most developed countries, is obesity. Even a "healthful" oil would not deal with that problem, as long as the calories remain the same. However, many of the people belonging to this group, especially young people who might still avoid atherosclerosis later in life by adopting a healthful lifestyle, are more easily persuaded to choose an alternative food which causes less damage to their metabolic system. An article entitled "Dietary Fats Still Sparks Controversy" (Haumann B.F., INFORM, vol 5, no 4, 1994, pp 346-56) deals with this important subject and how futile the warnings to reduce fat consumption have been in the past, as they often seem to be against human nature. First of all, the point is made that many of the low calorie type of products are not accepted by a public that generally requires oils and fats because they make other nutrients more palatable. Another observation, referred to in the same article (Id. at 352), made by Professor Susan Schiffman in the Department of Psychology at Duke University is: "*Experimental data* *show that it is very difficult for people to lower fat in their diet. Animal and human studies indicate dietary fat is addictive. This is because fat intake is linked to the endogenous opiate peptide system, the body's natural genetic receptors to opiates*." Another argument for the futility of low calorie warnings is mentioned in the same article, to wit, that people may eat some low caloric food but then eat so much of it or of other food that there is no gain in the overall calorie intake. With these considerations in mind, the oil composition claimed herein may provide a means by which the public may continue to enjoy oil in their diet in recommended moderation, while not violating the currently held school of thought among health professionals and nutritionists regarding which oils are healthful in the diet. As has been noted herein, each of the constituent oils used in the preparation of the various oil compositional embodiments in accordance with the invention is thought by the general consensus of the medical world to impart positive metabolic effects when included in the diet.

## Claims

1. An edible oil composition, comprising a major proportion of a bulk oil having triglycerides, total fatty acid moieties of which are predominantly monounsaturated fatty acids and a first minor proportion of sesame oil, wherein sesamin is present in a range of 25-45 mg per 100 g of edible oil composition and sesamolin in a range of 20-40 mg per 100 g of edible oil composition.

2. An edible oil composition according to claim 1, **characterized in** further comprising a second minor proportion of an edible oil rich in Δ-5 avenasterol.

3. An edible oil composition according to claim 1, wherein said sesame oil is prepared by a process which includes acid refining in place of alkali refining.

4. An edible oil composition according to claim 1, wherein said sesame oil is prepared by a process which includes acid bleaching in place of alkali bleaching.

5. An edible oil composition according to claim 1, wherein said monounsaturated fatty acids of said bulk oil are substantially *cis*-configured monounsaturated fatty acids.

6. An edible oil composition according to claim 1, wherein said total fatty acid moieties of said bulk oil include at least 70% monounsaturated fatty acids.

7. An edible oil composition according to claim 1, wherein any saturated fatty acid moieties of said bulk oil do not exceed 10% of said total fatty acid moieties.

8. An edible oil composition according to claim 2, wherein any saturated fatty acid moieties of said bulk oil do not exceed 10% of said total fatty acid moieties.

9. An edible oil composition according to claim 2, wherein said edible oil rich in Δ-5 avenasterol is at least one selected from the group consisting of rice bran oil, oat germ oil and wheat germ oil.

10. An edible oil composition according to claim 2, wherein said edible oil rich in Δ-5 avenasterol is a rice bran oil.

11. An edible oil composition according to claim 2, wherein said sesame oil is extracted from seed from at least on of *Sesamum indicum, Sesamum angustifolium, Sesamum alatum* and other sesame species high in sesame lignans content.

12. An edible oil composition according to claim 2, wherein said major proportion comprises at least about 80% by weight of the edible oil composition.

13. An edible oil composition according to claim 12, wherein said first and second minor proportions each comprises from about 0,5 to about 10% by weight of the edible oil composition.

14. An edible oil composition according to claim 12, wherein said first minor proportion comprises from about 6% to about 10%, and said second minor proportion comprises from about 5% to about 10%, each by weight of the edible oil composition.

15. An edible oil composition according to claim 2, wherein said edible oil rich in Δ-5 avenasterol is rice bran oil; and said second minor proportion is from about 1,5% to about 4%.

16. An edible oil composition according to claim 1, wherein said first minor proportion is from about 0,5% to about 6% by weight of the edible oil composition.

17. An edible oil composition according to claim 1, wherein said first minor proportion comprises from about 0,5 to about 10% by weight of the edible oil composition.

18. An edible oil composition according to claim 2, wherein the second minor proportion is rice bran oil according to a proportion from about 1,5% to 4%.

19. Method for the production of an edible oil composition, comprising a major proportion of a bulk oil having triglycerides, total fatty acid moieties of which are predominantly monounsaturated fatty acids and a first minor proportion of sesame oil, **characterized in that** the sesame oil is obtained by using the following process steps in the order of:
a) screening of sesame crops or seeds to provide those richest in antioxidant factors,
b) preheating the sesame seeds to 80-105°C for 30-120 minutes prior to extraction to increase the antioxidative potential in the oil product,
c) press extracting or solvent-extracting the sesame seeds for maximizing the concentration of lignans in the crude oil,
d) refining and/or bleaching with methods which minimize the loss of antioxidant potential,
e) omitting deodorization or carrying out only marginal deodorization by heating to less than 109°C for a period of 2 hours at minimal pressure.

## Patentansprüche

1. Eßbare Ölmischung, bestehend aus einer größeren Menge an Triglyzeride aufweisenden Basisöls, dessen gesamte Fettsäureanteile vorherrschend einfach gesättigte Fettsäuren sind, und aus einer ersten kleineren Menge an Sesamöl, bei welcher Sesamin in einem Bereich von 25 - 45 mg pro 100 g eßbarer Ölmischung, und Sesamolin in einem Bereich von 20 - 40 mg pro 100 g eßbarer Ölmischung vorhanden sind.

2. Eßbare Ölmischung nach Anspruch 1, **dadurch gekennzeichnet, daß** sie außerdem eine zweite kleinere Menge an eßbarem Öl aufweist, welche reich in -5 Avenasterol ist.

3. Eßbare Ölmischung nach Anspruch 1, bei welcher das Sesamöl durch ein Verfahren zubereitet worden ist, welches Säureraffination anstelle von Alkaliraffination einschließt.

4. Eßbare Ölmischung nach Anspruch 1, bei welcher das Sesamöl durch ein Verfahren bereitet worden ist, welches Säurebleichen anstelle von Alkalibleichen einschließt.

5. Eßbare Ölmischung nach Anspruch 1, bei welcher die einfach ungesättigten Essigsäuren des Basisöls im wesentlichen cis-konfigurierte einfach ungesättigte Fettsäuren sind.

6. Eßbare Ölmischung nach Anspruch 1, bei welcher die gesamten Fettsäureanteilen des Basisöls zumindest 70% einfach ungesättigte Fettsäuren umfassen.

7. Eßbare Ölmischung nach Anspruch 1, bei welcher jedwede gesättigten Fettsäureanteile des Basisöls 10 % der gesamten Fettsäureanteile nicht überschreiten.

8. Eßbare Ölmischung nach Anspruch 2, bei welcher jedwede gesättigten Fettsäureanteile des Basisöls 10 % der gesamten Fettsäureanteile nicht überschreiten.

9. Eßbare Ölmischung nach Anspruch 2, bei welcher das eßbare Öl, welches reich an -5 Avenasterol ist, zumindest eines ist, daß aus der Gruppe ausgewählt ist, die aus Reiskleieöl, Haferkeimöl und Weizenkeimöl besteht.

10. Eßbare Ölmischung nach Anspruch 2, bei welcher das an -5 Avenasterol reiche eßbare Öl ein Reiskleieöl ist.

11. Eßbare Ölmischung nach Anspruch 2, bei welcher das Sesamöl aus Saatgut von zumindest einem von Sesamum indicum, Sesamum angustifolium, Sesamum alatum und anderen Sesamsorten extrahiert worden ist, die bezüglich ihres Sesam-Lignans-Gehalts reich sind.

12. Eßbare Ölmischung nach Anspruch 2, bei welcher die größere Menge aus zumindest 80 Gewichtsprozenten der eßbaren Ölmischung besteht.

13. Eßbare Ölmischung nach Anspruch 12, bei welcher die erste und die zweite kleinere Menge jeweils aus etwa 0,5 bis etwa 10 Gewichtsprozenten der eßbaren Ölmischung bestehen.

14. Eßbare Ölmischung nach Anspruch 12, bei welcher die erste kleinere Menge aus etwa 6% bis etwa 10% besteht und die zweite kleinere Menge aus etwa 5% bis etwa 10%, des Gewichts der eßbaren Ölmischung besteht.

15. Eßbare Ölmischung nach Anspruch 2, bei welcher das an -5 Avenasterol reiche Öl Reiskleieöl ist und die zweite kleinere Menge von etwa 1,5% bis etwa 4% beträgt.

16. Eßbare Ölmischung nach Anspruch 1, bei welcher die erste kleinere Menge von etwa 0,5% bis etwa 6% des Gewichts der eßbaren Ölmischung beträgt.

17. Eßbare Ölmischung nach Anspruch 1, bei welcher die erste kleinere Menge von etwa 0,5 bis etwa 10% des Gewichts der eßbaren Ölmischung beträgt.

18. Eßbare Ölmischung nach Anspruch 2, bei welcher die zweite kleinere Menge Reiskleieöl entsprechend einem Anteil von etwa 1,5% bis 4% ist.

19. Verfahren zur Herstellung einer eßbaren Ölmischung, die aus einer größeren Menge an Triglyzeride aufweisendem Basisöl, Gesamtfettsäureanteilen mit vorherrschend einfach ungesättigten Fettsäuren und einem ersten kleineren Anteil an Sesamöl besteht, **dadurch gekennzeichnet, daß** das Sesamöl unter Benutzung der folgenden Verfahrensschritte erhalten wird in der Reihenfolge:
a) Klassierung der Sesamernten oder -saaten, um diejenigen zur Verfügung zu stellen, die bezüglich ihrer antioxydativen Faktoren am reichsten sind,
b) Vorheizen der Sesamsaaten auf 80-105° Celsius für 30-120 Minuten vor der Extraktion, um das antioxydative Potential in dem Ölprodukt zu vergrößern,
c) Preßextraktion oder Lösungsmittelextraktion der Sesamsaaten zwecks Maximierung der Konzentration an Lignans in dem rohen Öl,
d) Raffination und/oder Bleichen mittels Verfahren, die einen Verlust an antioxydativem Potential minimieren,
e) Weglassung des Deodorierens oder Durchführung lediglich geringfügiger Deodorierung durch Aufheizung auf weniger als 109° Celsius für eine Zeitspanne von zwei Stunden bei minimalem Druck.

## Revendications

1. Huile comestible qui comprend une proportion majeure d'une huile en gros contenant des triglycérides, dont les fragments acides gras totaux sont principalement des acides gras mono-insaturés, et une première proportion mineure d'huile de sésame, huile comestible dans laquelle la sésamine est présente à raison de 25 à 45 mg pour 100 grammes d'huile comestible et la sésamoline est présente à raison de 20 à 40 mg pour 100 grammes d'huile comestible.

2. Huile comestible selon la revendication 1, **caractérisée en ce qu'**elle comprend en outre une seconde proportion mineure d'une huile comestible riche en Δ-5 avenastérol.

3. Huile comestible selon la revendication 1, dont ladite huile de sésame est préparée par un procédé qui comprend un raffinage par un acide à la place du raffinage par un alcali.

4. Huile comestible selon la revendication 1, dont ladite huile de sésame est préparée par un procédé qui comprend un blanchiment par un acide à la place du blanchiment par un alcali.

5. Huile comestible selon la revendication 1, dont lesdits acides gras mono-insaturés de ladite huile en gros sont essentiellement des acides gras mono-insaturés de configuration cis.

6. Huile comestible selon la revendication 1, pour laquelle lesdits fragments acides gras totaux de ladite huile en gros renferment au moins 70 % d'acides gras mono-insaturés.

7. Huile comestible selon la revendication 1, pour laquelle les fragments acides gras saturés de ladite huile en gros ne dépassent pas 10 % de ladite totalité des fragments acides gras.

8. Huile comestible selon la revendication 2, pour laquelle les fragments acides gras saturés de ladite huile en gros ne dépassent pas 10 % de ladite totalité des fragments acides gras.

9. Huile comestible selon la revendication 2, dans laquelle ladite huile comestible riche en Δ-5 avenastérol est au moins une huile choisie parmi l'huile de son de riz, l'huile de germe d'avoine et l'huile de germe de blé.

10. Huile comestible selon la revendication 2, dans laquelle ladite huile comestible riche en Δ-5 avenastérol est une huile de son de riz.

11. Huile comestible selon la revendication 2, pour laquelle ladite huile de sésame est extraite de graines provenant d'au moins l'une des espèces Sesamum indicum, Sesamum angustifolium, Sesamum alatum et autres espèces de sésame à forte teneur en lignanes de sésame.

12. Huile comestible selon la revendication 2, dont ladite proportion majeure constitue au moins environ 80 % en poids de l'huile comestible.

13. Huile comestible selon la revendication 12, dont ladite première proportion mineure et ladite seconde proportion mineure constituent chacune d'environ 0,5 à environ 10 % en poids de l'huile comestible.

14. Huile comestible selon la revendication 12, dont ladite première proportion mineure constitue d'environ 6 % à environ 10 % en poids de l'huile comestible, et ladite seconde proportion mineure constitue d'environ 5 % à environ 10 % en poids de l'huile comestible.

15. Huile comestible selon la revendication 2, dans laquelle ladite huile comestible riche en Δ-5 avenastérol est de l'huile de son de riz, et ladite seconde proportion mineure représente d'environ 1,5 % à environ 4 %.

16. Huile comestible selon la revendication 1, dans laquelle ladite première proportion mineure représente d'environ 0,5 % à environ 6 % en poids de l'huile comestible.

17. Huile comestible selon la revendication 1, dans laquelle ladite première proportion mineure représente d'environ 0,5 à environ 10 % en poids de l'huile comestible.

18. Huile comestible selon la revendication 2, dans laquelle la seconde proportion mineure est constituée d'huile de son de riz selon une proportion d'environ 1,5 % à environ 4 %.

19. Procédé de production d'une huile comestible comprenant une proportion majeure d'une huile en gros contenant des triglycérides, dont les fragments acides gras totaux sont principalement des acides gras mono-insaturés, et une première proportion mineure d'huile de sésame, **caractérisé en ce que** l'on obtient l'huile de sésame en utilisant dans l'ordre indiqué les étapes de procédé suivantes :
a) on trie des récoltes ou des graines de sésame pour obtenir celles qui sont les plus riches en facteurs antioxydants,
b) on chauffe au préalable les graines de sésame à une température de 80 à 105 °C pendant 30 à 120 minutes, avant l'extraction, pour augmenter le potentiel antioxydant du produit huileux,
c) on extrait par pressage ou à l'aide d'un solvant les graines de sésame pour rendre maximale la concentration des lignanes dans l'huile brute,
d) on raffine et/ou on blanchit à l'aide de procédés qui réduisent au minimum la perte de potentiel antioxydant, et
e) on omet la désodorisation ou bien l'on effectue qu'une désodorisation marginale en chauffant à une température inférieure à 109 °C pendant une durée de 2 heures, à une pression minimale.
